# EUROPEAN PATENT APPLICATION

(11) **EP 4 823 026 A1**
(43) Date of publication of application: **14.10.2026**
(21) Application number: 24910387.0
(22) Date of filing: 15.11.2024
(51) Int. Cl.: H04L 5/00, H04W 72/04

(54) **COMMUNICATION METHOD AND APPARATUS**

(30) Priority: 28.12.2023 CN 202311862105
(71) Applicant: Huawei Technologies Co., Ltd., Shenzhen, Guangdong 518129 (CN)
(72) Inventor: YUAN, Shitong, Shenzhen, Guangdong 518129 (CN); LIU, Fengwei, Shenzhen, Guangdong 518129 (CN); YAN, Mao, Shenzhen, Guangdong 518129 (CN)
(74) Representative: Grünecker Patent- und Rechtsanwälte PartG mbB
(86) International application number: PCT/CN2024/132385
(87) International publication number: WO 2025/139452

(57) **Abstract**

This application provides a communication method and apparatus, and relates to the field of communication technologies. The method includes: respectively sending first-type reference signals of a first port on M resources, where there are a total of M first-type reference signals, M is an integer greater than 1, the M first-type reference signals are in a one-to-one correspondence with M first-type sequences, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, both K and P are positive integers, and a sum of K and P is M, to provide another manner of generating a sequence of a reference signal, to meet different communication requirements.

## Description

### CROSS-REFERENCE TO RELATED APPLICATIONS

This application claims priority to Chinese Patent Application No. 202311862105.3, filed with the China National Intellectual Property Administration on December 28, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A Zadoff-Chu (Zadoff-Chu, ZC) sequence (sequence) is used to generate various reference signals, for example, may be used to generate a demodulation reference signal (demodulation reference signal, DMRS). Currently, a manner of generating a sequence is simple. Therefore, another manner of generating a sequence is urgently needed.

### SUMMARY

This application provides a communication method and apparatus, to provide another manner of generating a sequence of a reference signal.

According to a first aspect, an embodiment of this application provides a communication method. The method may be performed by a sending apparatus. The sending apparatus may be any device, component, module, or the like that has a sending function, for example, may be a terminal device, a software or hardware module (for example, a chip or a transmitter) in a terminal device, a network device, or a software or hardware module (for example, a chip or a transmitter) in a network device. This is not limited in this application. The method includes: respectively sending first-type reference signals of a first port on M resources, where there are a total of M first-type reference signals, M is an integer greater than 1, M first-type reference signals are in a one-to-one correspondence with M first-type sequences, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, both K and P are positive integers, and a sum of K and P is M.

The M resources may be M resources that are different in time domain and/or frequency domain. The M resources are used to transmit the M first-type reference signals. In other words, one of the M resources is used to transmit one of the M first-type reference signals. All of the M first-type reference signals may be uplink reference signals, downlink reference signals, or the like. This is not specifically limited. The M first-type reference signals are in a one-to-one correspondence with the M first-type sequences. This may be understood as that one of the M first-type reference signals may be obtained (or generated) based on one of the M first-type sequences. A value of M may be, for example, 2, 4, 6, 8, 12, 16, or 32. Values of K and P may be the same. For example, both K and P are M/2. For example, M is 2, and both K and P are 1; or M is 4, and both K and P are 2.

In this embodiment of this application, a part of first-type sequences (for example, the K first-type sequences) and another part of first-type sequences (for example, the P first-type sequences) among the M first-type sequences may be obtained by performing at least one of an identity operation, negation, conjugation, or flipping based on different sequences (the first sequence and the second sequence). This provides another manner of generating a sequence. If different sequences are selected as the first sequence or the second sequence, the generated M first-type sequences also vary. This helps improve flexibility of generating a sequence.

In a possible implementation, the first sequence and the second sequence meet at least one of the following conditions: The first sequence and the second sequence are complementary sequences; a value of a sum of energy of a frequency domain response of the first sequence and energy of a frequency domain response of the second sequence belongs to a first value range; or a sum of energy of a frequency domain response of the first sequence and energy of a frequency domain response of the second sequence is a constant modulus. Optionally, the following three descriptions are interchangeable: The first sequence and the second sequence are complementary sequences, the value of the sum of the energy of the frequency domain response of the first sequence and the energy of the frequency domain response of the second sequence belongs to the first value range, and the sum of the energy of the frequency domain response of the first sequence and the energy of the frequency domain response of the second sequence is the constant modulus.

The first value range may include one or more constants, for example, 1 or 2. The energy of the frequency domain response may be obtained by calculating a square or a 2-norm of an absolute value (or a modulus) of a frequency domain signal. The energy of the frequency domain response may also be understood as an energy spectrum or the like. This is not specifically limited.

In the foregoing implementation, because the first sequence and the second sequence may form a flat frequency domain response, after receiving a reference signal generated based on the first sequence and a reference signal generated based on the second sequence, a receiving apparatus can obtain a stable frequency domain response, to improve quality of communication between the receiving apparatus and the sending apparatus, and further improve accuracy of channel estimation performed by the receiving apparatus.

In a possible implementation, the method further includes: respectively sending second-type reference signals of a second port on the M resources, where there are a total of M second-type reference signals, the M second-type reference signals are in a one-to-one correspondence with M second-type sequences, K second-type sequences of the M second-type sequences are obtained by performing at least one of an identity operation, negation, conjugation, or flipping on the first sequence, and P second-type sequences of the M second-type sequences are obtained by performing at least one of an identity operation, negation, conjugation, or flipping on the second sequence.

The second port is different from the first port. The second-type reference signal of the second port and the first-type reference signal of the first port may be a same type of reference signal or different types of reference signals. This is not limited.

In the foregoing implementation, the M resources may indicate multiplexing of a plurality of ports (for example, the first port and the second port), to reduce resources occupied by a reference signal, and help increase a communication capacity. In addition, if different sequences are selected as the first sequence or the second sequence, the generated M second-type sequences also vary. This helps improve flexibility of generating a sequence. In addition, when the first sequence and the second sequence are complementary sequences or the value of the sum of the energy of the frequency domain response of the first sequence and the energy of the frequency domain response of the second sequence belongs to the first value range, quality of receiving the M second-type reference signals by the receiving apparatus can also be improved, and a solution of supporting multi-user or multi-port code division multiplexing in a case of complementary sequences is further provided.

In a possible implementation, the method further includes: receiving first indication information, where the first indication information indicates a first orthogonal code, and the first orthogonal code is used to determine the M first-type sequences of the first port. Optionally, the first indication information may further indicate a second orthogonal code, and the second orthogonal code is used to determine the M second-type sequences of the second port.

The first indication information may directly include the first orthogonal code. Alternatively, the first indication information includes an index of the first orthogonal code, and the index of the first orthogonal code may be used to determine the first orthogonal code. Alternatively, the first orthogonal code includes an index or an identifier (for example, a logical identifier) of the first port or the like, and the index or the identifier of the first port or the like may be used to determine the first orthogonal code.

In the foregoing implementation, a manner of designing an orthogonal code is provided. For example, a computation or an operation to be performed may be defined in the orthogonal code, so that the sending apparatus can determine, based on the first orthogonal code, how to determine sequences of a port.

In a possible implementation, the K first-type sequences include a third sequence, the P first-type sequences include a fourth sequence, and the first orthogonal code indicates one of the following: The third sequence is a result of an identity operation on the first sequence, and the fourth sequence is a result of conjugation and an identity operation on the second sequence; the third sequence is a result of an identity operation on the first sequence, and the fourth sequence is a result of conjugation and negation on the second sequence; the third sequence is a result of an identity operation on the first sequence, and the fourth sequence is a result of flipping, conjugation, and an identity operation on the second sequence; or the third sequence is a result of an identity operation on the first sequence, and the fourth sequence is a result of flipping, conjugation, and negation on the second sequence.

In the foregoing implementation, a plurality of manners of determining the third sequence and the fourth sequence are provided.

In a possible implementation, the K first-type sequences include a third sequence and a fifth sequence, the P first-type sequences include a fourth sequence and a sixth sequence, and the first orthogonal code indicates one of the following: The third sequence is a result of an identity operation on the first sequence, the fourth sequence is a result of an identity operation on the second sequence, the fifth sequence is a result of an identity operation on the first sequence, and the sixth sequence is a result of an identity operation on the second sequence; the third sequence is a result of conjugation and negation on the first sequence, the fourth sequence is a result of conjugation on the second sequence, the fifth sequence is a result of conjugation and negation on the first sequence, and the sixth sequence is a result of conjugation on the second sequence; the third sequence is a result of an identity operation on the first sequence, the fourth sequence is a result of an identity operation on the second sequence, the fifth sequence is a result of negation on the first sequence, and the sixth sequence is a result of negation on the second sequence; or the third sequence is a result of conjugation on the first sequence, the fourth sequence is a result of conjugation and negation on the second sequence, the fifth sequence is a result of conjugation and negation on the first sequence, and the sixth sequence is a result of conjugation on the second sequence.

In the foregoing implementation, a plurality of manners of determining the third sequence, the fourth sequence, the fifth sequence, and the sixth sequence are provided.

In a possible implementation, the first orthogonal code includes w(n), where n=0, ..., F-1, F represents a total length of the first orthogonal code, n is an index of an orthogonal code in the first orthogonal code, w(n) is +1, -1, +flip{j}, -flip{j}, +j, or -j, j represents conjugation, and flip represents flipping. Certainly, there may be a plurality of forms of the first orthogonal code. This is not specifically limited.

In a possible implementation, one of the M resources includes D resource units, a first-type sequence of the M first-type sequences that corresponds to the resource includes D elements, the D resource units are used for mapping the D elements, and D is an integer greater than or equal to 1.

That the D resource units are used for mapping the D elements may be described as that the D resource units are in a one-to-one correspondence (or associated) with the D elements, or may be described as that each of the D resource units is used to carry one of the D elements. Each of the D resource units represents a unit of a resource. For example, a resource unit may be a time domain unit or a frequency domain unit. The frequency domain unit may be, for example, a subcarrier, a resource element (resource element, RE), or a resource block (resource block, RB). For example, D is 12. To be specific, one of the M resources includes 12 subcarriers, and the 12 subcarriers may be used for mapping 12 elements included in one first-type sequence. The element may be a complex number or in another form. This is not specifically limited.

According to a second aspect, an embodiment of this application provides a communication method. The method may be performed by a receiving apparatus. The receiving apparatus may be any device, component, module, or the like that has a sending function, for example, may be a terminal device, a software or hardware module (for example, a chip or a transmitter) in a terminal device, a network device, or a software or hardware module (for example, a chip or a transmitter) in a network device. This is not limited in this application. The method includes: obtaining one first-type result based on each ofN first-type received signals and a seventh reference signal, where a total of N first-type results are obtained, the N first-type received signals are in a one-to-one correspondence with N first-type ports, and N is an integer greater than or equal to 1; and obtaining one second-type result based on each of the N first-type received signals and an eighth reference signal, where N second-type results are obtained, and the N first-type results and the N second-type results are used for estimating channels of the N first-type ports.

In this embodiment of this application, in the method, two different types of processing may be performed on each received signal, to help construct an equation set to solve a channel, and provide a channel solving manner.

In a possible implementation, the method further includes: obtaining one third-type result based on each of N second-type received signals and a conjugate of the seventh reference signal, where a total of N third-type results are obtained; obtaining one fourth-type result based on the N second-type received signals and a conjugate of the eighth reference signal, where a total of N fourth-type results are obtained; and estimating channels of the N first-type ports and channels of the N second-type ports based on the N first-type results, the N second-type results, the N third-type results, and the N fourth-type results.

In the foregoing implementation, received signals of different users or ports may be processed, and channels (or channel responses) of different users or ports may be separated or solved, to provide a manner of solving channels of a plurality of users or a plurality of ports.

In a possible implementation, the N first-type received signals include first-type reference signals of the N first-type ports that are respectively received on M resources, there are a total of N×M first-type reference signals, M is an integer greater than 1, and M is an integer greater than 1; the N second-type received signals include second-type reference signals of the N second-type ports that are received on the M resources, and there are a total of N×M second-type reference signals; and the seventh reference signal and the eighth reference signal correspond to two of the N×M first-type reference signals, or the seventh reference signal and the eighth reference signal correspond to two of the N×M second-type reference signals.

According to a third aspect, an embodiment of this application provides a communication method. The method may be performed by a receiving apparatus. The receiving apparatus may be any device, component, module, or the like that has a sending function, for example, may be a terminal device, a software or hardware module (for example, a chip or a transmitter) in a terminal device, a network device, or a software or hardware module (for example, a chip or a transmitter) in a network device. This is not limited in this application. The method includes: receiving first indication information, where the first indication information indicates a first orthogonal code, the first orthogonal code is used to determine M first-type sequences, the M first sequences are in a one-to-one correspondence with M first-type reference signals, the M first-type reference signals are used to estimate a channel of a first port, M is an integer greater than 1, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, M is an integer greater than 1, both K and P are positive integers, and a sum of K and P is M.

In this embodiment of this application, an orthogonal code is designed. The orthogonal code introduces at least one of an identity operation, negation, conjugation, flipping, or the like, so that the receiving apparatus can perform at least one of an identity operation, negation, conjugation, or flipping based on different sequences (the first sequence and the second sequence) to obtain the M first-type sequences, to provide another manner of generating a sequence. If different sequences are selected as the first sequence or the second sequence, the generated M first-type sequences also vary. This helps improve flexibility of generating a sequence.

In a possible implementation, the method further includes: respectively sending the M first-type reference signals on M resources, where one of the M first-type reference signals is sent on one of the M resources.

In a possible implementation, the K first-type sequences include a third sequence, the P first-type sequences include a fourth sequence, and the first orthogonal code indicates one of the following: The third sequence is a result of an identity operation on the first sequence, and the fourth sequence is a result of conjugation and an identity operation on the second sequence; the third sequence is a result of an identity operation on the first sequence, and the fourth sequence is a result of conjugation and negation on the second sequence; the third sequence is a result of an identity operation on the first sequence, and the fourth sequence is a result of flipping, conjugation, and an identity operation on the second sequence; or the third sequence is a result of an identity operation on the first sequence, and the fourth sequence is a result of flipping, conjugation, and negation on the second sequence.

In a possible implementation, the K first-type sequences include a third sequence and a fifth sequence, the P first-type sequences include a fourth sequence and a sixth sequence, the M first-type sequences include the third sequence, the fourth sequence, the fifth sequence, and the sixth sequence, and the first orthogonal code indicates one of the following: The third sequence is a result of an identity operation on the first sequence, the fourth sequence is a result of an identity operation on the second sequence, the fifth sequence is a result of an identity operation on the first sequence, and the sixth sequence is a result of an identity operation on the second sequence; the third sequence is a result of conjugation and negation on the first sequence, the fourth sequence is a result of conjugation on the second sequence, the fifth sequence is a result of conjugation and negation on the first sequence, and the sixth sequence is a result of conjugation on the second sequence; the third sequence is a result of an identity operation on the first sequence, the fourth sequence is a result of an identity operation on the second sequence, the fifth sequence is a result of negation on the first sequence, and the sixth sequence is a result of negation on the second sequence; or the third sequence is a result of conjugation on the first sequence, the fourth sequence is a result of conjugation and negation on the second sequence, the fifth sequence is a result of conjugation and negation on the first sequence, and the sixth sequence is a result of conjugation on the second sequence.

In a possible implementation, the first orthogonal code includes **w(n),** where n=0, ..., F-1, F represents a total length of the first orthogonal code, n is an index of an orthogonal code in the first orthogonal code, **w(n)** is +1, -1, +flip{j}, -flip{j}, +j, or -j, j represents conjugation, and flip represents flipping.

In a possible implementation, the first sequence and the second sequence meet at least one of the following conditions: The first sequence and the second sequence are complementary sequences; a value of a sum of energy of a frequency domain response of the first sequence and energy of a frequency domain response of the second sequence belongs to a first value range; or a sum of energy of a frequency domain response of the first sequence and energy of a frequency domain response of the second sequence is a constant modulus.

In a possible implementation, one of the M resources includes D resource units, a first-type sequence of the M first-type sequences that corresponds to the resource includes D elements, the D resource units are used for mapping the D elements, and D is an integer greater than or equal to 1.

According to a fourth aspect, an embodiment of this application provides a communication method. The method may be performed by a sending apparatus. The sending apparatus may be any device, component, module, or the like that has a sending function, for example, may be a terminal device, a software or hardware module (for example, a chip or a transmitter) in a terminal device, a network device, or a software or hardware module (for example, a chip or a transmitter) in a network device. This is not limited in this application. The method includes: sending first indication information, where the first indication information indicates a first orthogonal code, the first orthogonal code is used to determine M first-type sequences, the M first sequences are in a one-to-one correspondence with M first-type reference signals, the M first-type reference signals are used to estimate a channel of a first port, M is an integer greater than 1, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, M is an integer greater than 1, both K and P are positive integers, and a sum of K and P is M.

In a possible implementation, the K first-type sequences include a third sequence, the P first-type sequences include a fourth sequence, and the first orthogonal code indicates one of the following: The third sequence is a result of an identity operation on the first sequence, and the fourth sequence is a result of conjugation and an identity operation on the second sequence; the third sequence is a result of an identity operation on the first sequence, and the fourth sequence is a result of conjugation and negation on the second sequence; the third sequence is a result of an identity operation on the first sequence, and the fourth sequence is a result of flipping, conjugation, and an identity operation on the second sequence; or the third sequence is a result of an identity operation on the first sequence, and the fourth sequence is a result of flipping, conjugation, and negation on the second sequence.

In a possible implementation, the K first-type sequences include a third sequence and a fifth sequence, the P first-type sequences include a fourth sequence and a sixth sequence, the M first-type sequences include the third sequence, the fourth sequence, the fifth sequence, and the sixth sequence, and the first orthogonal code indicates one of the following: The third sequence is a result of an identity operation on the first sequence, the fourth sequence is a result of an identity operation on the second sequence, the fifth sequence is a result of an identity operation on the first sequence, and the sixth sequence is a result of an identity operation on the second sequence; the third sequence is a result of conjugation and negation on the first sequence, the fourth sequence is a result of conjugation on the second sequence, the fifth sequence is a result of conjugation and negation on the first sequence, and the sixth sequence is a result of conjugation on the second sequence; the third sequence is a result of an identity operation on the first sequence, the fourth sequence is a result of an identity operation on the second sequence, the fifth sequence is a result of negation on the first sequence, and the sixth sequence is a result of negation on the second sequence; or the third sequence is a result of conjugation on the first sequence, the fourth sequence is a result of conjugation and negation on the second sequence, the fifth sequence is a result of conjugation and negation on the first sequence, and the sixth sequence is a result of conjugation on the second sequence.

In a possible implementation, the first orthogonal code includes w(n), where n=0, ..., F-1, F represents a total length of the first orthogonal code, n is an index of an orthogonal code in the first orthogonal code, w(n) is +1, -1, +flip{j}, -flip{j}, +j, or -j, j represents conjugation, and flip represents flipping.

In a possible implementation, the first sequence and the second sequence meet at least one of the following conditions: The first sequence and the second sequence are complementary sequences; a value of a sum of energy of a frequency domain response of the first sequence and energy of a frequency domain response of the second sequence belongs to a first value range; or a sum of energy of a frequency domain response of the first sequence and energy of a frequency domain response of the second sequence is a constant modulus.

In a possible implementation, one of M resources includes D resource units, a first-type sequence of the M first-type sequences that corresponds to the resource includes D elements, the D resource units are used for mapping the D elements, and D is an integer greater than or equal to 1.

According to a fifth aspect, an embodiment of this application provides a communication apparatus. The communication apparatus may be the sending apparatus in any one of the first aspect or the possible implementations of the first aspect, or a software or hardware module in the sending apparatus, or an apparatus that can implement a function of the sending apparatus. The communication apparatus includes a corresponding means (means) or module for performing any one of the first aspect or the possible implementations of the first aspect. For example, the communication apparatus includes a transceiver module (sometimes also referred to as a transceiver unit). Optionally, the communication apparatus further includes a processing module (sometimes also referred to as a processing unit).

For example, the transceiver module is configured to respectively send first-type reference signals of a first port on M resources.

The communication apparatus may further perform the method according to any one of the possible implementations of the first aspect. Details are not described herein again.

According to a sixth aspect, an embodiment of this application provides a communication apparatus. The communication apparatus may be the receiving apparatus in any one of the second aspect or the possible implementations of the second aspect, or a software or hardware module in the receiving apparatus, or an apparatus that can implement a function of the receiving apparatus. The communication apparatus includes a corresponding means (means) or module for performing any one of the second aspect or the possible implementations of the second aspect. For example, the communication apparatus includes a processing module (sometimes also referred to as a processing unit). Optionally, the communication apparatus further includes a transceiver module (sometimes also referred to as a transceiver unit).

For example, the processing module is configured to: obtain one first-type result based on each of N first-type received signals and a seventh reference signal, where a total of N first-type results are obtained, the N first-type received signals are in a one-to-one correspondence with N first-type ports, and N is an integer greater than or equal to 1; and obtain one second-type result based on each of the N first-type received signals and an eighth reference signal, where N second-type results are obtained.

The communication apparatus may further perform the method according to any one of the possible implementations of the second aspect. Details are not described herein again.

According to a seventh aspect, an embodiment of this application provides a communication apparatus. The communication apparatus may be the receiving apparatus in any one of the third aspect or the possible implementations of the third aspect, or a software or hardware module in the receiving apparatus, or an apparatus that can implement a function of the receiving apparatus. The communication apparatus includes a corresponding means (means) or module for performing any one of the third aspect or the possible implementations of the third aspect. For example, the communication apparatus includes a transceiver module (sometimes also referred to as a transceiver unit). Optionally, the communication apparatus further includes a processing module (sometimes also referred to as a processing unit).

For example, the transceiver module is configured to receive first indication information, where the first indication information indicates a first orthogonal code.

The communication apparatus may further perform the method according to any one of the possible implementations of the third aspect. Details are not described herein again.

According to an eighth aspect, an embodiment of this application provides a communication apparatus. The communication apparatus may be the receiving apparatus in any one of the fourth aspect or the possible implementations of the fourth aspect, or a software or hardware module in the receiving apparatus, or an apparatus that can implement a function of the receiving apparatus. The communication apparatus includes a corresponding means (means) or module for performing any one of the fourth aspect or the possible implementations of the fourth aspect. For example, the communication apparatus includes a transceiver module (sometimes also referred to as a transceiver unit). Optionally, the communication apparatus further includes a processing module (sometimes also referred to as a processing unit).

For example, the transceiver module is configured to send first indication information, where the first indication information indicates a first orthogonal code.

The communication apparatus may further perform the method according to any one of the possible implementations of the fourth aspect. Details are not described herein again.

According to a ninth aspect, an embodiment of this application provides a communication apparatus. The apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement, through a logic circuit or by executing code instructions, the method according to any one of the first aspect, the possible implementations of the first aspect, the second aspect, the possible implementations of the second aspect, the third aspect, the possible implementations of the third aspect, the fourth aspect, or the possible implementations of the fourth aspect.

During specific implementation, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, to be specific, a computer device supporting a wireless communication function. Specifically, the wireless communication device may be a terminal, for example, a smartphone, or may be a radio access network device, for example, a base station.

In another implementation, the communication apparatus may be a part of components in a wireless communication device, for example, an integrated circuit product such as a system chip or a communication chip. The system chip may also be referred to as a system-on-a-chip (system-on-a-chip, SoC), or referred to as an SoC chip for short. The communication chip may include a baseband processing chip and a radio frequency processing chip. The baseband processing chip is sometimes also referred to as a modem (modem) or a baseband chip. The radio frequency processing chip is sometimes also referred to as a radio frequency transceiver (transceiver) or a radio frequency chip. During physical implementation, a part or all of chips of the communication chip may be integrated into the SoC chip. For example, the baseband processing chip is integrated into the SoC chip, and the radio frequency processing chip is not integrated into the SoC chip. The interface circuit may be a radio frequency processing chip in the wireless communication device, and the processor may be a baseband processing chip in the wireless communication device. The interface circuit may be an input/output interface, an interface circuit, an output circuit, an input circuit, a pin, a related circuit, or the like in the chip or a chip system. The processor may alternatively be embodied as a processing circuit or a logic circuit.

According to a tenth aspect, an embodiment of this application provides a communication apparatus. The apparatus includes a processor and a memory. The memory is configured to store one or more computer programs. The one or more computer programs include computer-executable instructions. When the communication apparatus runs, the processor executes the one or more computer programs stored in the memory, to enable the communication apparatus to perform the method according to any one of the first aspect, the possible implementations of the first aspect, the second aspect, the possible implementations of the second aspect, the third aspect, the possible implementations of the third aspect, the fourth aspect, or the possible implementations of the fourth aspect.

Optionally, the communication apparatus further includes other components, for example, an antenna, an input/output module, and an interface. The components may be hardware, software, or a combination of software and hardware.

According to an eleventh aspect, an embodiment of this application provides a chip system. The chip system includes a processor and an interface. The processor is configured to invoke instructions from the interface and run the instructions. When the processor executes the instructions, the method according to any one of the first aspect, the possible implementations of the first aspect, the second aspect, the possible implementations of the second aspect, the third aspect, the possible implementations of the third aspect, the fourth aspect, or the possible implementations of the fourth aspect is implemented.

According to a twelfth aspect, an embodiment of this application provides a computer-readable storage medium. The computer-readable storage medium is configured to store a computer program or instructions. When the computer program or the instructions are run, the method according to any one of the first aspect, the possible implementations of the first aspect, the second aspect, the possible implementations of the second aspect, the third aspect, the possible implementations of the third aspect, the fourth aspect, or the possible implementations of the fourth aspect is implemented.

According to a thirteenth aspect, an embodiment of this application provides a computer program product including instructions. When the computer program product runs on a computer, the method according to any one of the first aspect, the possible implementations of the first aspect, the second aspect, the possible implementations of the second aspect, the third aspect, the possible implementations of the third aspect, the fourth aspect, or the possible implementations of the fourth aspect is implemented.

For beneficial effects of any one of the technical solutions in the second aspect to the thirteenth aspect, refer to the descriptions of the beneficial effects of corresponding technical solutions in the first aspect, the second aspect, or the third aspect. Repeated descriptions are omitted herein.

### BRIEF DESCRIPTION OF DRAWINGS

FIG. 1A and FIG. 1B are diagrams of configurations in a DMRS type 1;
FIG. 2A and FIG. 2B are diagrams of configurations in a DMRS type 2;
FIG. 3 to FIG. 6 are diagrams of four communication systems to which embodiments of this application are applicable;
FIG. 7 is a diagram of a communication method according to an embodiment of this application;
FIG. 8A and FIG. 8B are diagrams of M resources according to an embodiment of this application;
FIG. 9 is a diagram of a principle of complementary sequences according to an embodiment of this application;
FIG. 10A and FIG. 10B are diagrams 1 of mapping M first-type sequences to M resources according to an embodiment of this application;
FIG. 11A and FIG. 11B are diagrams 2 of mapping M first-type sequences to M resources according to an embodiment of this application;
FIG. 12 is a diagram 3 of mapping M first-type sequences to M resources according to an embodiment of this application;
FIG. 13 is a diagram 4 of mapping M first-type sequences to M resources according to an embodiment of this application;
FIG. 14 is a diagram of another communication method according to an embodiment of this application;
FIG. 15 is a diagram of sending reference signals according to an embodiment of this application;
FIG. 16 is another diagram of sending reference signals according to an embodiment of this application;
FIG. 17 is a diagram of still another communication method according to an embodiment of this application; and
FIG. 18 to FIG. 20 are diagrams of structures of three communication apparatuses according to embodiments of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.
1. A reference signal (reference signal), also referred to as a pilot, is a type of signal for channel estimation, channel demodulation, or the like. The reference signal includes an uplink reference signal and a downlink reference signal.

The uplink reference signal includes at least one of a channel sounding signal (sounding reference signal, SRS), a demodulation reference signal (demodulation reference signal, DMRS), a phase noise tracking signal (phase noise tracking reference signal, PTRS), or an uplink positioning signal (uplink positioning RS). The DMRS includes an uplink control channel demodulation reference signal (physical uplink control channel demodulation reference signal, PUCCH-DMRS/PUCCH DMRS), an uplink data channel demodulation reference signal (physical uplink shared channel demodulation reference signal, PUSCH-DMRS/PUSCH DMRS), and/or the like.

The downlink reference signal includes at least one of a primary synchronization signal (primary synchronization signal, PSS)/secondary synchronization signal (secondary synchronization signal, SSS), a downlink control channel demodulation reference signal (physical downlink control channel demodulation reference signal, PDCCH-DMRS/PDCCH DMRS), a downlink data channel demodulation reference signal (physical downlink shared channel demodulation reference signal, PDSCH-DMRS/PDSCH DMRS), a phase noise tracking signal PTRS, a channel state information reference signal (channel status information reference signal, CSI-RS), a cell signal (cell reference signal, CRS), a fine synchronization signal (time/frequency tracking reference signal, TRS), an LTE/NR positioning signal (positioning RS), or the like.

With continuous evolution of a standard, a type or a name of the reference signal may continuously change. This is not specifically limited.

2. A DMRS configuration mode (or configuration type (type)) (which may also be referred to as a DMRS configuration, a type, or the like) is used to describe a status of a resource occupied by a DMRS. The DMRS configuration mode may include a DMRS type 1 and a DMRS type 2. Both the DMRS type 1 and the DMRS type 2 include a single-symbol DMRS configuration and a double-symbol DMRS configuration.

In a single-symbol DMRS configuration in the DMRS type 1, a comb structure 2 (comb2) and a 2 cyclic shift (cyclic shift, CS) may be used, and therefore a single symbol supports a maximum of four DMRS ports. In a double-symbol DMRS configuration in the DMRS type 1, a comb2, a 2CS, and a time division orthogonal cover code (time division orthogonal cover code, TD-OCC) may be used, and therefore double symbols support a maximum of eight DMRS ports. In a single-symbol DMRS configuration in the DMRS type 2, adjacent resource elements (resource element, RE) and a frequency division orthogonal cover code (frequency division orthogonal cover code, FD-OCC) may be used, and therefore a single symbol supports a maximum of six DMRS ports. In a double-symbol DMRS configuration in the DMRS type 2, adjacent REs, an FD-OCC, and a TD-OCC may be used, and therefore double symbols support a maximum of 12 DMRS ports. The following separately provides descriptions with reference to the accompanying drawings.

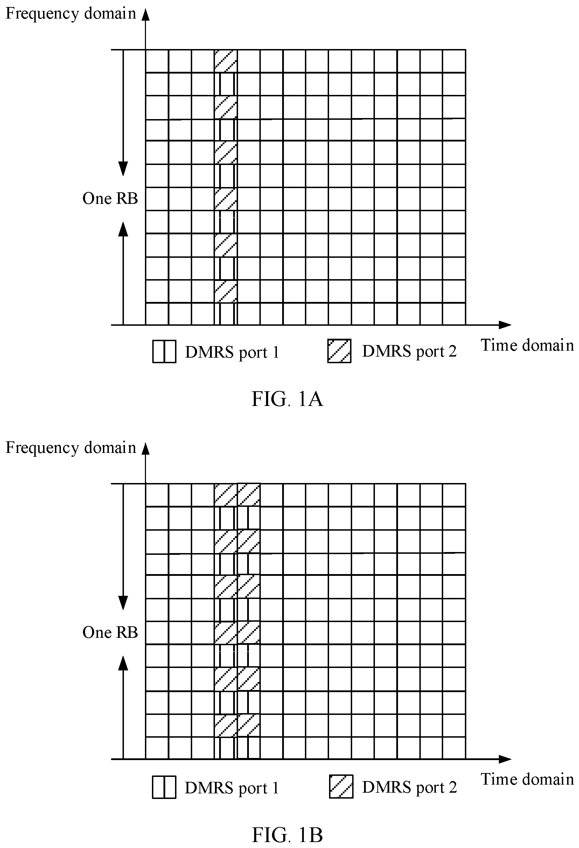

FIG. 1A and FIG. 1B are diagrams of configurations in the DMRS type 1. FIG. 1A shows the single-symbol DMRS configuration in the DMRS type1. As shown in FIG. 1A, in frequency domain, one DMRS port occupies REs in a comb pattern at 1/2 density, a DMRS port 1 corresponds to 1/2 of REs on one symbol, and a DMRS port 2 corresponds to 1/2 of REs on the symbol. In addition, a same RE may be multiplexed on two DMRS ports based on a CS sequence. In this way, one symbol may support a maximum of four DMRS ports.

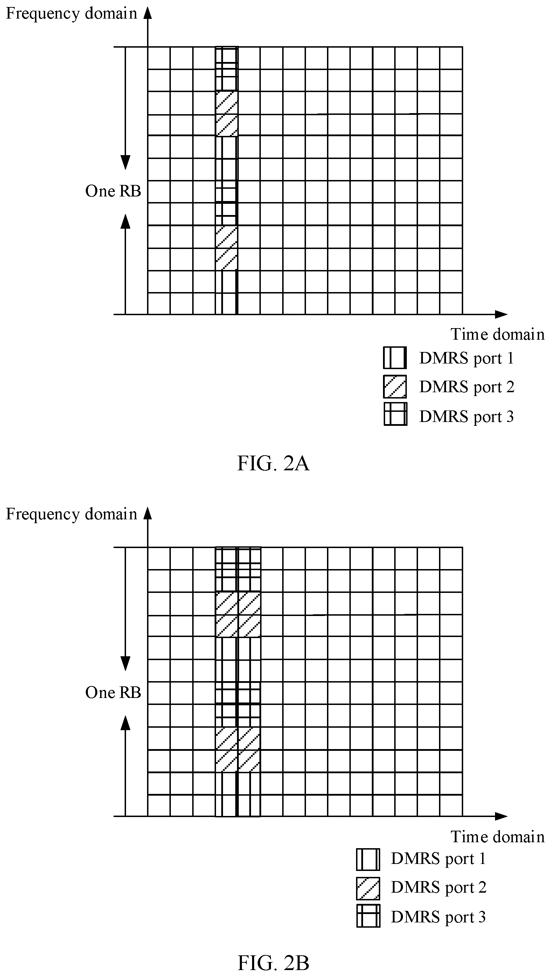

Still refer to FIG. 1A and FIG. 1B. FIG. 1B shows the double-symbol DMRS configuration in the DMRS type 1. As shown in FIG. 1B, in frequency domain, one DMRS port occupies REs in a comb pattern at 1/2 density. As shown in FIG. 2A and FIG. 2B, a DMRS port 1 corresponds to 1/2 of REs on double symbols, and a DMRS port 2 corresponds to 1/2 of REs on the double symbols. In addition, a same RE may be multiplexed on two DMRS ports based on a CS sequence, and two symbols may be further multiplexed in time domain based on an OCC. In this way, double symbols can support a maximum of eight DMRS ports.

FIG. 2A and FIG. 2B are diagrams of configurations in the DMRS type 2. FIG. 2A shows the single-symbol DMRS configuration in the DMRS type 2. As shown in FIG. 2A, in frequency domain, each port occupies two consecutive REs in a comb pattern at 1/3 density. As shown in FIG. 2A, a DMRS port 1, a DMRS port 2, and a DMRS port 3 each are carried in 1/3 of REs on one symbol. A same RE is multiplexed on two DMRS ports based on an OCC. Therefore, one symbol supports a maximum of six DMRS ports.

Still refer to FIG. 2A and FIG. 2B. FIG. 2B shows the double-symbol DMRS configuration in the DMRS type 2. As shown in FIG. 2B, for a double-symbol DMRS, in frequency domain, each port occupies two consecutive REs in a comb pattern at 1/3 density. As shown in FIG. 2B, REs on double symbols may be used to carry a DMRS port 1, a DMRS port 2, a DMRS port 3, and the like. In addition, a same RE is multiplexed on two DMRS ports based on an OCC code, and double symbols are multiplexed in time domain in an OCC mode. Therefore, double symbols support a maximum of 12 DMRS ports.

With continuous evolution of a standard, a type, a name, a quantity of supported ports, or the like of the DMRS configuration mode may continuously change. This is not specifically limited.

3. A resource (resource) may include a time domain resource and/or a frequency domain resource.

The time domain resource may include at least one of a radio frame, a subframe, a slot (slot), a mini slot (mini slot), or an orthogonal frequency division multiplexing (orthogonal frequency division multiplexing, OFDM) symbol (symbol). The time domain resource may be measured in units of time domain units (or referred to as time units). One time domain unit may include one radio frame, one subframe, one slot (slot), one mini slot (mini slot), or one OFDM symbol (symbol). One time domain unit may alternatively include a resource obtained by aggregating a plurality of radio frames, a plurality of subframes, a plurality of slots, a plurality of mini slots, or a plurality of OFDM symbols. This is not limited. One radio frame may include a plurality of subframes, one subframe may include one or more slots, and one slot may include at least one symbol. Alternatively, one radio frame may include a plurality of slots, and one slot may include at least one symbol. It should be noted that the symbol in embodiments of this application may be an OFDM symbol.

The frequency domain resource may include at least one of an RE, a resource block (resource block, RB), a channel, a subchannel (subchannel), a carrier (carrier), or a bandwidth part (BWP, bandwidth part). The frequency domain resource may be measured in units of frequency domain units. One frequency domain unit may include one resource element (resource element, RE), one RB, one channel, one subchannel (subchannel), one carrier (carrier), one bandwidth part (BWP, bandwidth part), or the like. One frequency domain unit may alternatively include a resource obtained by aggregating a plurality of REs, a plurality of RBs, a plurality of subchannels, a plurality of carriers, or a plurality of BWPs. This is not specifically limited.

A unit of the resource may be referred to as a resource unit. If the resource includes the time domain resource, one resource unit may be U1 time domain units. If the resource includes the frequency domain resource, one resource unit may be U2 frequency domain units. Alternatively, if the resource includes the frequency domain resource or the time domain resource, the resource unit may alternatively be U1 time domain units, U2 frequency domain units, or the like. U1 and U2 are integers, and U1 and U2 may be the same or different, for example, both are 1 or 2.

4. A port may also be referred to as an antenna port, and may be understood as a transmit antenna identified by a receiving device, or a transmit antenna that can be distinguished in space. One antenna port may be preconfigured for each virtual antenna, and each virtual antenna may be a weighted combination of a plurality of physical antennas. During actual implementation, one or more physical antenna elements may correspond to or connect to one antenna port. When an antenna port is used to send a reference signal, a port of the reference signal is used to distinguish between measurement results of different antenna ports.

In embodiments of this application, unless otherwise specified, a quantity of a noun indicates "a singular noun or a plural noun", that is, "one or more". "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects. For example, A/B indicates A or B. "At least one of the following items (pieces)" or a similar expression thereof indicates any combination of the items, including one of the items (pieces) or any combination of a plurality of the items (pieces). For example, at least one of a, b, or c indicates a, b, c, a and b, a and c, b and c, or a, b, and c, where a, b, and c may be in a singular form or a plural form.

In embodiments of this application, X first-type objects, X second-type objects, and the like may be understood as descriptions of division of a plurality of objects or a set to which a plurality of objects belong. For example, the X first-type objects may be understood as representing X objects, and the X second-type objects may be understood as representing X objects. In practice, types of X objects of a first type and X objects of a second type are not strictly limited. In addition, the X objects of the X first-type objects may be completely different, or partially the same, or completely the same. This is not specifically limited.

In embodiments of this application, an "indication" may include a direct indication, an indirect indication, an explicit indication, and an implicit indication. Indication information being described as indicating A may be understood as that the indication information carries A, directly indicates A, or indirectly indicates A. In this application, information indicated by the indication information is referred to as to-be-indicated information. During specific implementation, the to-be-indicated information may be indicated in a plurality of manners, for example, but not limited to: The to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed upon. For example, specific information may alternatively be indicated by an arrangement order of a plurality of pieces of information that is pre-agreed upon (for example, stipulated in a protocol), to reduce indication overheads to some extent. In addition, the to-be-indicated information may be sent as a whole, or may be divided into a plurality of pieces of sub-information for separate sending, and sending periodicities and/or sending occasions of the sub-information may be the same or different.

In embodiments of this application, "sending" and "receiving" represent signal transfer directions. For example, "sending information to XX" may be understood as that a destination end of the information is XX, and may include direct sending through an air interface, or include indirect sending via another unit or module through an air interface. "Receiving information from YY" may be understood as that a source end of the information is YY, and may include direct receiving from YY through an air interface, or may include indirect receiving from YY via another unit or module through an air interface. The "sending" may also be understood as "outputting" of a chip interface, and the "receiving" may also be understood as "inputting" of the chip interface. In other words, sending and receiving may be performed between devices, for example, between a network device and a terminal device, or may be performed within a device. For example, sending or receiving is performed between components, modules, chips, software modules, or hardware modules in a device through a bus, a wire, or an interface.

To provide another manner of generating a sequence, embodiments of this application provide a communication solution. In this solution, a sending apparatus may respectively send first-type reference signals of a port (for example, a first port) on M resources, where M first-type reference signals are cumulatively sent, the M first-type reference signals are in a one-to-one correspondence with M first-type sequences, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, both K and P are positive integers, and a sum of K and P is M. In this way, a sequence corresponding to a reference signal can be flexibly generated based on the first sequence or the second sequence, and another manner of generating a sequence is provided, to improve flexibility of generating a sequence or a reference signal.

The communication solution provided in embodiments of this application may be applied to various communication networks (or systems) including a receiving apparatus and at least one sending apparatus. The receiving apparatus is an apparatus with a receiving function, and the sending apparatus is an apparatus with a sending function. The receiving apparatus is a software or hardware module (for example, a chip or a receiver) in a device, or may be a device. The sending apparatus is a software or hardware module (for example, a chip or a transmitter) in a device, or may be a device. Specific implementation forms of the receiving apparatus and the sending apparatus are not limited in embodiments of this application. In addition, a quantity of sending apparatuses and a quantity of receiving apparatuses are not limited in embodiments of this application.

It should be understood that the receiving apparatus and the sending apparatus are a group of relative concepts. When a device 1 sends information to a device 2, the device 1 may be considered as a sending apparatus, and the device 2 may be considered as a receiving apparatus. When the device 2 sends information to a device 3, the device 2 may be considered as a sending apparatus, and the device 3 may be considered as a receiving apparatus. In addition, the sending apparatus may have a receiving function, and correspondingly, the receiving apparatus may also have a sending function. This is not limited.

The communication solution provided in embodiments of this application is applicable to various communication networks, for example, a long term evolution (long term evolution, LTE) communication network, a 5th generation (5th generation, 5G) mobile communication network (for example, a new radio (new radio, NR) network), a 6th generation communication network, or a communication network that appears during future communication development (or future evolution). In addition, the communication solution provided in embodiments of this application may be further applied to a machine-to-machine (machine-to-machine, M2M) communication network, a machine type communication (machine type communication, MTC) communication network, a sidelink (sidelink, SL) system, an internet of things (internet of things, IoT), or another communication network. This is not limited in embodiments of this application. The SL may also be referred to as a side communication link, a side link, a sidelink, a direct link, a side-link, a secondary link, or the like. The SL may include a link for device-to-device (device-to-device, D2D) communication, vehicle-to-everything (also referred to as vehicle-to-anything) (vehicle-to-everything, V2X) communication, or sidelink on unlicensed spectrum (sidelink on unlicensed spectrum, SL-U) communication, or the like.

With reference to the accompanying drawings, the following describes diagrams of example communication systems to which embodiments of this application are applicable.

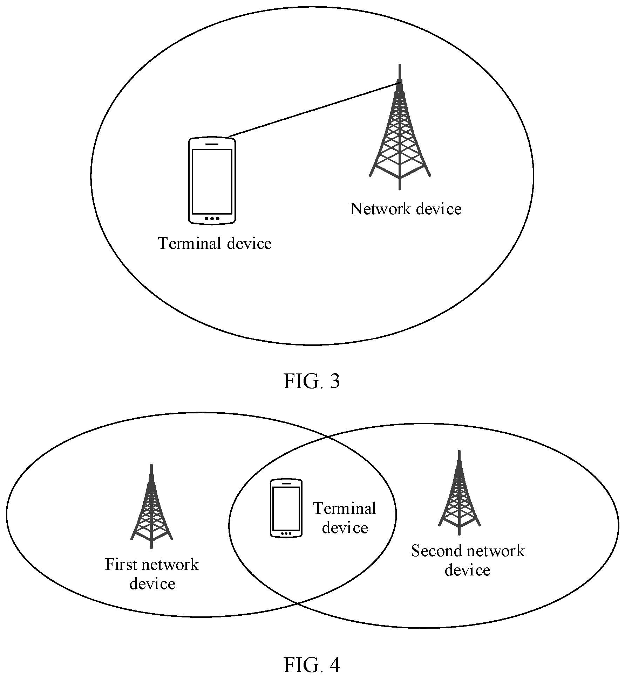

FIG. 3 is a diagram of a communication system according to an embodiment of this application. As shown in FIG. 3, the communication system includes a terminal device and a network device.

In a possible implementation, the network device in FIG. 3 is an example of a sending apparatus, and the terminal device is an example of a receiving apparatus. In this possible implementation, the network device may respectively send a plurality of reference signals to the terminal device through a plurality of ports, and the terminal device may estimate, based on the plurality of reference signals, channels corresponding to the plurality of ports of the network device. Optionally, in this case, the network device may include a plurality of antennas. The plurality of antennas may be in a one-to-one correspondence with the plurality of ports, or one of the plurality of antennas may correspond to at least two of the plurality of ports. This is not specifically limited.

In another possible implementation, the terminal device in FIG. 3 is an example of a sending apparatus, and the network device is an example of a receiving apparatus. In this implementation, the terminal device may respectively send a plurality of reference signals to the network device through a plurality of ports, and the network device may estimate, based on the plurality of reference signals, channels corresponding to the plurality of ports. Optionally, in this case, the terminal device may include a plurality of antennas. The plurality of antennas may be in a one-to-one correspondence with the plurality of ports, or one of the plurality of antennas may correspond to at least two of the plurality of ports. This is not specifically limited.

The terminal device may be an apparatus with a wireless transceiver function, and may be a stationary device, a mobile device, a handheld device, a wearable device, a vehicle-mounted device, or a built-in wireless apparatus (for example, a communication module or a chip system) of the foregoing device. The terminal device is configured to connect people, things, machines, or the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, a smart office, a smart wearable, smart transportation, a smart city (smart city), an uncrewed aerial vehicle, a robot, and the like. The terminal device may sometimes be referred to as user equipment (user equipment, UE), a terminal, an access station, a UE station, a remote station, a wireless communication device, a user apparatus, or the like.

For example, the network device includes an access network device (or referred to as an access network apparatus/access network element) and/or a core network device (or referred to as a core network apparatus/core network element).

The access network device is an apparatus with a wireless transceiver function, and is configured to communicate with the terminal device. The access network device includes but is not limited to a base station (BTS, NodeB, eNodeB/eNB, or gNodeB/gNB) or a transmission reception point (transmission reception point, TRP) in the foregoing communication system, a future evolved 3GPP base station, an access node in a wireless fidelity (wireless fidelity, Wi-Fi) system, a wireless relay node, a wireless backhaul node, a satellite, an uncrewed aerial vehicle, or the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. The access network device may alternatively be a radio controller, a central unit (central unit, CU), which may also be referred to as a convergence unit, and/or a distributed unit (distributed unit, DU) in a cloud radio access network (cloud radio access network, C(R)AN) scenario. The access network device may alternatively be a server, a wearable device, a vehicle-mounted device, or the like. For example, an access network device in the vehicle-to-everything (vehicle-to-everything, V2X) technology may be a roadside unit (roadside unit, RSU). An example in which the access network device is a base station is used below for description. A plurality of access network devices in the communication system may be base stations of a same type, or may be base stations of different types. The base station may communicate with the terminal device, or may communicate with the terminal device through a relay station. The terminal device may communicate with a plurality of base stations in different access technologies.

When the access network device includes a CU and/or a DU, the CU and the DU may be understood as being obtained by dividing the access network device from a perspective of logical functions. The CU and the DU may be physically separated, or may be deployed together. This is not specifically limited in embodiments of this application. One CU may be connected to one DU, or a plurality of DUs may share one CU. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed in the CU, and a remaining radio link control (radio link control, RLC) layer, media access control (media access control, MAC) layer, and physical layer are deployed in the DU. In embodiments of this application, the CU and the DU are not necessarily split in the foregoing manner based on a protocol stack, and may alternatively be split in another manner, for example, split based on a service type.

The access network device in embodiments of this application may alternatively be a central unit-control plane (CU-CP) node or a central unit-user plane (CU-UP) node, or may include a CU-CP and a CU-UP. The CU-CP is responsible for a control plane function, and mainly includes RRC and PDCP-C. The PDCP-C is mainly responsible for data encryption/decryption, integrity protection, data transmission, and the like on a control plane. The CU-UP is responsible for a user plane function, and mainly includes SDAP and PDCP-U. The SDAP is mainly responsible for processing data of a core network and mapping a flow (flow) to a bearer. The PDCP-U is mainly responsible for encryption/decryption, integrity protection, header compression, sequence number maintenance, data transmission, and the like on a data plane.

In different systems, the CU (including the CU-CP or the CU-UP) or the DU may alternatively have different names, but a person skilled in the art may understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The core network device is configured to implement at least one of the following functions: mobility management, data processing, session management, policy and charging, and the like. Names of devices that implement core network functions in systems of different access technologies may be different. This is not limited in embodiments this application. A 5G system is used as an example. The core network device includes an access and mobility management function (access and mobility management function, AMF), a session management function (session management function, SMF), a user plane function (user plane function, UPF), or the like.

In embodiments of this application, an apparatus for implementing a function of the network device may be the network device, or may be an apparatus that can support the network device in implementing the function, for example, a chip system, where the apparatus may be installed in the network device. In the technical solutions provided in embodiments of this application, the technical solutions provided in embodiments of this application are described by using an example in which the apparatus for implementing the function of the network device is the network device. Similarly, in embodiments of this application, an apparatus for implementing a function of the terminal device may be the terminal device, or may be an apparatus that can support the terminal device in implementing the function, for example, a chip system, where the apparatus may be installed in the terminal device. In the technical solutions provided in embodiments of this application, the technical solutions provided in embodiments of this application are described by using an example in which the apparatus for implementing the function of the terminal device is the terminal device.

It should be understood that the network device may include a plurality of cells (cell), and each cell may be configured with a plurality of at least one carrier (carrier component, CC). A cell for serving the terminal device may be considered as a serving cell (serving cell). Serving cells corresponding to any two of the at least one terminal device may be the same or different. This is not specifically limited.

FIG. 4 is a diagram of a communication system according to an embodiment of this application. As shown in FIG. 4, the communication system includes a plurality of network devices (for example, a first network device and a second network device) and a terminal device. All of the plurality of network devices in FIG. 4 may be an example of a sending apparatus, and the terminal device may be an example of a receiving apparatus. For specific implementation forms of the terminal device and the network device, respectively refer to the implementation forms of the terminal device and the network device in FIG. 3. Details are not described herein again.

For example, the plurality of network devices may respectively send a plurality of reference signals to the terminal device, and the terminal device may estimate, based on the plurality of reference signals, channels corresponding to the plurality of network devices.

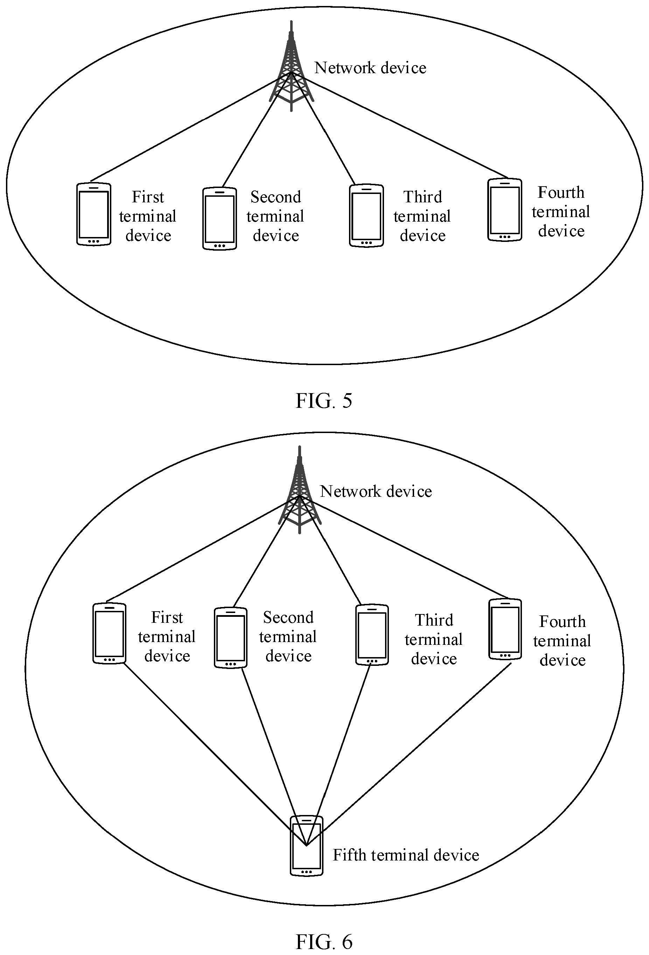

FIG. 5 is a diagram of a communication system according to an embodiment of this application. As shown in FIG. 5, the communication system includes a plurality of terminal devices (for example, a first terminal device, a second terminal device, a third terminal device, and a fourth terminal device) and a network device. At least one of the plurality of terminal devices in FIG. 5 may be an example of a sending apparatus, and the network device may be an example of a receiving apparatus. For specific implementation forms of the terminal device and the network device, respectively refer to the implementation forms of the terminal device and the network device in FIG. 3. Details are not described herein again.

For example, the first terminal device, the second terminal device, the third terminal device, and the fourth terminal device may separately send reference signals to the network device, and the network device may estimate channels of the first terminal device, the second terminal device, the third terminal device, and the fourth terminal device based on the received reference signals.

FIG. 6 is a diagram of a communication system according to an embodiment of this application. As shown in FIG. 6, the communication system includes a network device and a plurality of terminal devices (for example, a first terminal device, a second terminal device, a third terminal device, a fourth terminal device, and a fifth terminal device). At least one of the first terminal device, the second terminal device, the third terminal device, and the fourth terminal device in FIG. 6 may be an example of a sending apparatus, and the fifth terminal device may be an example of a receiving apparatus. For specific implementation forms of the terminal device and the network device, respectively refer to the implementation forms of the terminal device and the network device in FIG. 3. Details are not described herein again.

For example, the network device may configure corresponding resources for the first terminal device, the second terminal device, the third terminal device, and the fourth terminal device; the first terminal device, the second terminal device, the third terminal device, and the fourth terminal device may separately send reference signals to the fifth terminal device based on the corresponding resources; and the fifth terminal device may estimate channels of the first terminal device, the second terminal device, the third terminal device, and the fourth terminal device based on the received reference signals.

It should be understood that the fifth terminal device may be located within a signal coverage area of the network device, or may be located outside a signal coverage area of the network device. This is not specifically limited.

It should be understood that FIG. 3 to FIG. 6 show example communication systems to which embodiments of this application are applicable, and a communication system to which embodiments of this application are applicable is actually not limited.

The following describes a method provided in embodiments of this application with reference to the accompanying drawings. In the accompanying drawings corresponding to embodiments of this application, all steps indicated by dashed lines are optional steps. A sending apparatus in embodiments of this application is, for example, the network device or the terminal device in FIG. 3, the first network device or the second network device in FIG. 4, the first terminal device, the second terminal device, the third terminal device, or the fourth terminal device in FIG. 5, or the first terminal device, the second terminal device, the third terminal device, or the fourth terminal device in FIG. 6. A receiving apparatus in embodiments of this application is, for example, the terminal device or the network device in FIG. 3, the terminal device in FIG. 4, the network device in FIG. 5, or the fifth terminal device in FIG. 6. A terminal device in embodiments of this application is, for example, the terminal device in FIG. 3, the terminal device in FIG. 4, any terminal device in FIG. 5, or the terminal device in FIG. 6. If the technical solutions provided in embodiments of this application are applied to another communication system, a name, a function, and/or the like of a network element may vary. This is not limited.

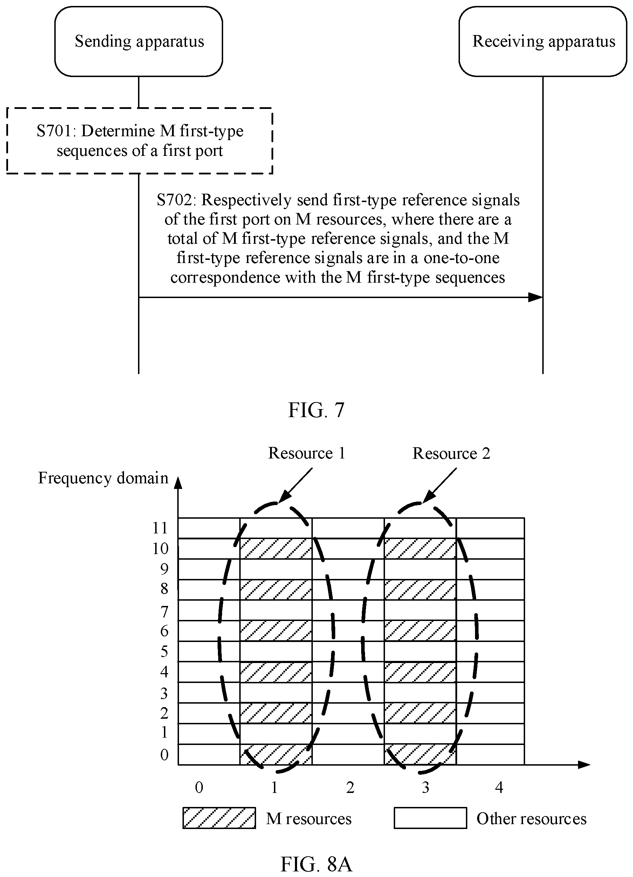

FIG. 7 is a diagram of a communication method according to an embodiment of this application. The following describes steps shown in FIG. 7.

S701: A sending apparatus determines M first-type sequences of a first port.

M is an integer greater than 1, and M is, for example, an even number. For example, a value of M is 2, 4, 6, 8, or 12. The M first-type sequences of the first port merely represent M sequences, and whether the M sequences are the same is not limited. For brevity of description, the M first-type sequences of the first port are referred to as M first-type sequences for short in the embodiment shown in FIG. 7. For example, any two of the M first-type sequences are different, or at least two of the M first-type sequences are the same, or all of the M first-type sequences are the same. This is not limited.

Each of the M first-type sequences may include D elements. Each element may be a complex number. D is a positive integer. For example, a value of D is 12 or 24. This is not limited. The M first-type sequences are used to generate (or determine) M first-type reference signals. Alternatively, this may be described as that the M first-type sequences are in a one-to-one correspondence with the M first-type reference signals, or may be described as that the M first-type reference signals are in a one-to-one correspondence with the M first-type sequences. For example, each of the M first-type sequences is used to generate one of the M first-type reference signals. Specifically, for example, the sending apparatus maps each of the M first-type sequences to one of M resources to obtain one first-type reference signal. By analogy, the M first-type reference signals may be obtained.

All of the M first-type reference signals may be M first-type reference signals of the first port of the sending apparatus, and correspondingly, the M first-type sequences may also be understood as M first-type sequences of the first port. The M first-type reference signals may be reference signals of a same type, for example, all are downlink reference signals or downlink reference signals. Optionally, all of the M first-type reference signals may alternatively be uplink reference signals or a specific type of reference signals of uplink reference signals. For example, all of the M first-type reference signals are CSI-RSs or DMRSs. This is not specifically limited. The M first-type reference signals represent M reference signals, and whether the M first-type reference signals are the same, a sending order of the M first-type reference signals, and the like are not limited.

Each of the M resources includes D resource units. For a meaning of the resource unit, refer to the foregoing content of the resource unit. A value of D may be an integer greater than or equal to 1. For example, D is 1, 6, 12, 1024, or 2048. This is not specifically limited. For example, the M resources are M different symbols, or the M resources are M RBs. N resource units included in each of the M resources may be D consecutive resource units, or may be D inconsecutive resource units. This is not limited. When the D resource units are inconsecutive, a group of two adjacent resource units among the D resource units may be spaced apart by one subcarrier, two subcarriers, or the like. This is not limited. The D resource units included in each of the M resources may be in a one-to-one correspondence with the D elements included in each of the M first-type sequences. This may be understood as that the D resource units included in each of the M resources may be used for respectively mapping (or carrying) the D elements included in each of the M first-type sequences, or this may be understood as that the D elements included in each of the M first-type sequences are respectively mapped to the D resource units included in each of the M resources. For example, an example in which M is 2, D is 12, and the resource unit is a subcarrier is used for description. The M first-type sequences include a sequence 1 and a sequence 2, and the sequence 1 and the sequence 2 each include 12 elements. The M resources include a resource 1 and a resource 2, the resource 1 includes a subcarrier 0 to a subcarrier 11 on a symbol 1, and the resource 2 may include a subcarrier 0 to a subcarrier 11 on a symbol 3. Correspondingly, the subcarrier 0 to the subcarrier 11 on the resource 1 may be used for mapping 12 elements included in the sequence 1, and the subcarrier 0 to the subcarrier 11 on the resource 2 may be used for mapping 12 elements included in the sequence 2.

The M resources may be M different resources. The M different resources are M resources that are different in time domain and/or frequency domain. This may also be understood that any two of the M resources are different in time domain, in frequency domain, or in both frequency domain and time domain. The following describes different cases.

Case 1: The M resources are the same in frequency domain but different in time domain. In this case, the M first-type sequences may be mapped in time domain, and the M first-type reference signals are code-divided in frequency domain.

This may be understood as that frequency domain resources corresponding to the M resources are the same but time domain resources corresponding to the M resources are different, or may be understood as that the M resources correspond to a same frequency domain resource but correspond to different time domain resources. For example, the M resources are different time domain units corresponding to a single carrier. For content of the time domain unit, refer to the foregoing content of the time domain unit. Repeated descriptions are omitted herein. Each of the M resources may occupy 1/Q time domain units in time domain, where Q is a positive number. For example, Q is 1/2, 1/4, 1/6, 1/8, 1/16, 1/32, 1, 2, 4, 8, 16, or 32. This is not specifically limited. For example, each of the M resources correspondingly occupies 1, 2, 4, 6, 8, 16, 32, 1/2, 1/3, 1/4, 1/8, 1/16, or 1/32 symbol in time domain.

Case 2: The M resources are the same in time domain but different in frequency domain. In this case, the M first-type sequences may be mapped in frequency domain, and the M first-type reference signals are code-divided in time domain.

This may be understood as that time domain resources corresponding to the M resources are the same but frequency domain resources corresponding to the M resources are different, or may be understood as that the M resources correspond to a same time domain resource but correspond to different frequency domain resources. For example, the M resources are different subcarriers (subcarrier) corresponding to one symbol. Each of the M resources may occupy 1/S frequency domain units in frequency domain, where S is a positive number. For example, S is 1/2, 1/4, 1/6, 1/8, 1/16, 1/32, 1, 2, 3, 4, 8, 16, or 32. This is not specifically limited. For example, each of the M resources correspondingly occupies 1, 2, 4, 6, 8, 16, 32, 1/2, 1/3, 1/4, 1/8, 1/16, or 1/32 subcarrier in frequency domain.

Case 3: The M resources are different in time domain and different in frequency domain.

This may be understood as that time domain resources corresponding to the M resources are different and frequency domain resources corresponding to the M resources are different, or may be understood as that the M resources correspond to different time domain resources and correspond to different frequency domain resources.

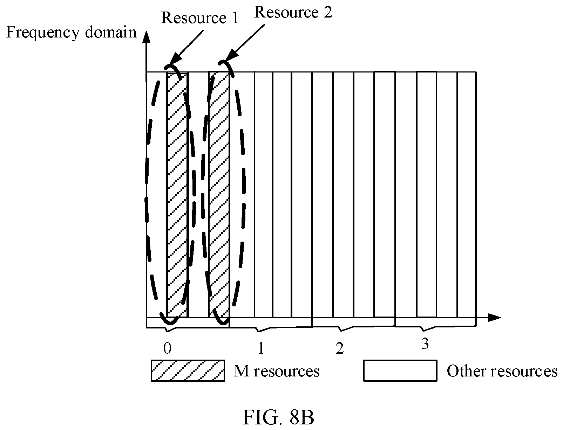

For example, FIG. 8A and FIG. 8B are diagrams of M resources according to an embodiment of this application. In the accompanying drawings (as shown in FIG. 8A and FIG. 8B) of this application, resources other than the M resources may be referred to as other resources.

FIG. 8A shows a type of M resources. In FIG. 8A, for example, each of the M resources occupies six subcarriers, that is, S is 1/6. In practice, a quantity of subcarriers occupied by each of the M resources is not limited, that is, a value of S is not limited.

In FIG. 8A, for example, M is 2, N is 6, and a resource unit is a subcarrier. As shown in FIG. 8A, the M resources include a resource 1 and a resource 2. The resource 1 includes six different subcarriers corresponding to a symbol 1, for example, a subcarrier 0, a subcarrier 2, a subcarrier 4, a subcarrier 6, a subcarrier 8, or a subcarrier 10. The resource 2 includes a subcarrier 0, a subcarrier 2, a subcarrier 4, a subcarrier 6, a subcarrier 8, or a subcarrier 10 corresponding to a symbol 3.

FIG. 8B shows another type of M resources. In FIG. 8B, for example, each of the M resources occupies 1/4 symbol, that is, Q is 4. In practice, a quantity of symbols occupied by each of the M resources is not limited, that is, a value of Q is not limited.

As shown in FIG. 8B, a resource 1 includes a single carrier corresponding to a (2/4)^{th} symbol of a symbol 0, and a resource 2 includes a single carrier corresponding to a (4/4)^{th} symbol of the symbol 0.

The M first-type sequences include K first-type sequences and P first-type sequences, a sum of K and P is M, and both K and P are positive integers. Optionally, values of K and P are the same, for example, both are M/2. In this case, it can be considered that the M first-type sequences include K or P groups of first-type sequences, and each group of first-type sequences includes one of the K first-type sequences and one of the P first-type sequences. For example, a value of M is 2, and both K and P are 1; or a value of M is 4, and both K and P are 2; or a value of M is 6, and both K and P are 3; or a value of M is 8, and both K and P are 4.

The K first-type sequences and the P first-type sequences may be generated in different manners. Examples are used below for description.

For example, the K first-type sequences may be obtained by performing at least one of an identity operation, negation, conjugation, or flipping on a first sequence. The K first-type sequences may be completely different (to be specific, any two of the K first-type sequences are different), or the K first-type sequences may be partially the same (to be specific, at least two of the K first-type sequences are the same), or the K first-type sequences may be completely the same (to be specific, any two of the K first-type sequences are the same).

For two different first-type sequences of the K first-type sequences, specific content of performing at least one of an identity operation, negation, conjugation, or flipping on the first sequence may vary. For example, the K first-type sequences include a sequence 1 and a sequence 2, in other words, the sequence 1 and the sequence 2 are two first-type sequences of the K first-type sequences. The sequence 1 may be obtained by performing an identity operation on the first sequence, and the sequence 2 may be obtained by performing conjugation and an identity operation on the first sequence.

Similarly, the P first-type sequences may be obtained by performing at least one of an identity operation, negation, conjugation, or flipping on a second sequence. The P first-type sequences may be completely different (to be specific, any two of the P first-type sequences are different), or the P first-type sequences may be partially the same (to be specific, at least two of the P first-type sequences are the same), or the P first-type sequences may be completely the same (to be specific, any two of the P first-type sequences are the same).

For two different first-type sequences of the P first-type sequences, specific content of performing at least one of an identity operation, negation, conjugation, or flipping on the second sequence may vary. For example, the P first-type sequences include a sequence 3 and a sequence 4. To be specific, the sequence 3 is an example of one of the P first-type sequences, and the sequence 4 is an example of one of the P first-type sequences. The sequence 3 may be obtained by performing an identity operation on the second sequence, and the sequence 4 may be obtained by performing conjugation and negation on the second sequence.

Both the first sequence and the second sequence may be pi/2-binary phase shift keying (binary phase shift keying, BPSK) modulated sequences, or sequences of another type. This is not limited. For example, both the first sequence and the second sequence are Gold sequences.

The first sequence and/or the second sequence may be preconfigured or predefined on the sending apparatus, for example, preconfigured on the sending apparatus by using a protocol; or may be indicated by a network device to the sending apparatus, where this case is applicable to a scenario in which the sending apparatus is a terminal device. Alternatively, a rule for generating the first sequence and/or the second sequence may be preconfigured or predefined on the sending apparatus, and the sending apparatus may obtain, from the network device, a parameter for generating the first sequence and/or the second sequence. The sending apparatus may generate the first sequence and/or the second sequence based on the rule and the parameter. A form of the rule is, for example, a formula, and the parameter may be, for example, a value of each letter in the formula. A manner of obtaining the first sequence and/or the second sequence by the sending apparatus is not specifically limited in this embodiment of this application.

In a possible design, the first sequence and the second sequence may meet one or more of the following conditions: The first sequence and the second sequence may be complementary sequences; a value of a sum of energy of a frequency domain response of the first sequence and energy of a frequency domain response of the second sequence is within (or belongs to) a first value range; or a sum of energy of a frequency domain response of the first sequence and energy of a frequency domain response of the second sequence is a constant modulus. The first value range includes at least one constant. For example, the first value range includes 1 and/or 2. The following two descriptions are interchangeable: The first sequence and the second sequence may be complementary sequences, the value of the sum of the energy of the frequency domain response of the first sequence and the energy of the frequency domain response of the second sequence belongs to the first value range, and the sum of the energy of the frequency domain response of the first sequence and the energy of the frequency domain response of the second sequence is the constant modulus. Any one of the three descriptions may be understood as that the first sequence and the second sequence constitute a flat frequency domain response. The energy of the frequency domain response may be understood as energy of a sequence mapped to frequency domain. The energy of the frequency domain response may be, for example, calculated by determining a square, a modulus, or a 2-norm of an absolute value of a frequency domain signal. The energy of the frequency domain response may also be understood as an energy spectrum or the like. This is not specifically limited. Optionally, when the first sequence and the second sequence are complementary sequences, two first-type sequences in one group of first-type sequences of the K groups of first-type sequences mentioned above may be understood as two sequences generated based on a pair of complementary sequences.

In this design, one of the first sequence and the second sequence may be preconfigured or predefined on the sending apparatus, or the sending apparatus may obtain one of the first sequence and the second sequence from the network device, and the sending apparatus may determine the other one of the first sequence and the second sequence based on one of the first sequence and the second sequence. Alternatively, the first sequence and the second sequence may be preconfigured or predefined on the sending apparatus, or the sending apparatus may obtain the first sequence and the second sequence from the network device. This is not limited. Alternatively, a rule for generating the first sequence and/or the second sequence may be preconfigured or predefined on the sending apparatus, and the sending apparatus may obtain, from the network device, a parameter for generating the first sequence and/or the second sequence.

When the first sequence and the second sequence are complementary sequences, optionally, it can be considered that a sum of energy of a frequency domain response of an i^{th} element in the first sequence and an energy of a frequency domain response of an i^{th} element in the second sequence is a constant modulus, or it can be considered that an i^{th} element in the first sequence and an i^{th} element in the second sequence are complementary, or it can be considered that a value of a sum of energy of a frequency domain response of an i^{th} element in the first sequence and energy of a frequency domain response of an i^{th} element in the second sequence belongs to a second value range. The second value range includes at least one constant. i is greater than or equal to 1, and is less than or equal to a quantity of elements included in the first sequence or a quantity of elements included in the second sequence. For example, if the first sequence includes {a1, a2} and the second sequence includes {b1, b2}, a1 and b1 may be complementary, and a2 and b2 may be complementary. The quantity of elements included in the first sequence and the quantity of elements included in the second sequence may be the same, for example, both are D.

In this design, because the first sequence and the second sequence can stabilize frequency domain flatness and a reference signal is generated based on the first sequence and the second sequence, quality of a reference signal received by a receiving apparatus can be improved, and accuracy of channel estimation performed by the receiving apparatus based on the reference signal can be improved.

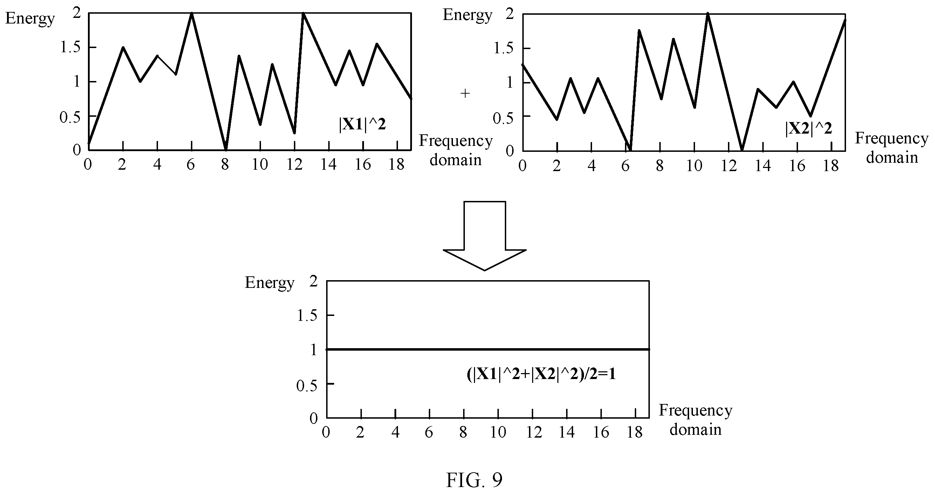

FIG. 9 is a diagram of a principle of complementary sequences according to an embodiment of this application. In the accompanying drawing in FIG. 9, a horizontal coordinate indicates frequency domain, and a vertical coordinate indicates energy. As shown in FIG. 9, the first sequence may be X₁, and the second sequence is X₂. Although energy |X₁²| of X₁ in a frequency domain response is unstable and energy |X₂|² of X₂ in a frequency domain response is unstable, a sum of |X₁|² and |X₂|² divided by 2 is equal to 1. Therefore, the receiving apparatus may stably receive a reference signal. In FIG. 9, |X₁|² is denoted as |X₁|^2, and |X₂|² is denoted as |X₂|^2.

The foregoing describes content of the first sequence and the second sequence. The following first describes an example manner of determining, by the sending apparatus, one of the K first-type sequences based on the first sequence (for ease of distinguishing, one of the K first-type sequences is referred to as a sequence Sq1 below).

A1: The sending apparatus performs an identity operation on the first sequence to obtain the sequence Sq1. In other words, the sequence Sq1 is obtained by performing the identity operation on the first sequence, or the sequence Sq1 may be considered as the first sequence.

For example, the first sequence is A, and the sequence Sq1 may be a result of the identity operation on the first sequence. In this case, the sequence Sq1 may be denoted as +A, where "+" represents the identity operation. "+A" may also be denoted as "A".

A2: The sending apparatus performs an identity operation, conjugation, and flipping on the first sequence to obtain the sequence Sq1. In other words, the sequence Sq1 is obtained by performing the identity operation, conjugation, and flipping on the first sequence. In A2, an order of performing the identity operation, conjugation, and flipping on the second sequence is not specifically limited. For example, flipping may be understood as exchanging locations of an i^{th} element and an (R+1-i)^{th} element in a sequence, where R is a total quantity of elements included in the sequence, and i is sequentially 1 to R. For example, a sequence is {1, 2, 3, 4, 5, 6, 7, 8, 9, 10}, and a result of flipping the sequence is {10, 9, 8, 7, 6, 5, 4, 3, 2, 1}. Performing conjugation on a sequence is to perform conjugation on each element in the sequence.

For example, the first sequence is A, and the sequence Sq1 may be a result of sequentially performing flipping, conjugation, and an identity operation on the first sequence. In this case, the sequence Sq1 may be denoted as +flip{A} *, where "*" represents conjugation, and "flip" represents flipping.

For another example, the first sequence is A, and the sequence Sq1 may be a result of sequentially performing flipping, flipping, conjugation, and an identity operation on the first sequence. In this case, the sequence Sq1 may be denoted +flip{flip{A} } *.

A3: The sending apparatus performs negation, conjugation, and flipping on the first sequence to obtain the sequence Sq1. In other words, the sequence Sq1 is obtained by performing negation, conjugation, and flipping on the first sequence. In A3, an order of performing negation, flipping, and conjugation on the second sequence is not limited.

For example, the second sequence is A, and the sequence Sq1 may be a result of sequentially performing flipping, conjugation, and negation on the first sequence. In this case, the sequence Sq1 may be denoted as -flip {A}*.

Alternatively, the second sequence is A, and the sequence Sq1 may be a result of sequentially performing flipping, flipping, conjugation, and negation on the first sequence. In this case, the sequence Sq1 may be denoted as -flip {flip{A} } *.

A4: The sending apparatus performs an identity operation and conjugation on the first sequence to obtain the sequence Sq1. In other words, the sequence Sq1 is obtained by performing the identity operation and conjugation on the first sequence. In A4, an order of performing the identity operation and conjugation on the first sequence is not limited.

For example, the second sequence is A, and the sequence Sq1 may be a result of sequentially performing conjugation and the identity operation on the first sequence. In this case, the sequence Sq1 may be denoted as +A*.

A5: The sending apparatus performs negation and conjugation on the first sequence to obtain the sequence Sq1. In other words, the sequence Sq1 may be obtained by performing negation and conjugation on the first sequence. In A5, an order of performing negation and conjugation on the first sequence is not limited either.

For example, the first sequence is A, and the sequence Sq1 may be a result of sequentially performing conjugation and negation on the first sequence. In this case, the sequence Sq1 may be denoted as -A*.

A1 to A5 are examples of determining the sequence Sq1 based on the first sequence. In practice, there may alternatively be a plurality of manners of determining the sequence Sq1. Details are not described herein. In addition, a manner of determining any one of the K first-type sequences by the sending apparatus is similar to the manner of determining, by the sending apparatus, the sequence Sq1 based on the first sequence. Details are not described herein again.

An example in which the K first-type sequences include a third sequence and a fifth sequence is used below to describe content of determining the third sequence and the fifth sequence based on the first sequence.

B1: The sending apparatus performs an identity operation on the first sequence to obtain the third sequence. In other words, the third sequence is obtained by performing the identity operation on the first sequence. Similarly, the sending apparatus performs an identity operation on the first sequence to obtain the fifth sequence. In other words, the fifth sequence is obtained by performing the identity operation on the first sequence. In this case, the third sequence and the fifth sequence may be considered as a same sequence.

B2: The sending apparatus may perform conjugation and negation on the first sequence to obtain the third sequence. In other words, the third sequence is obtained by performing conjugation and negation on the first sequence. For example, the sending apparatus sequentially performs conjugation and negation on the first sequence to obtain the third sequence. Similarly, the fifth sequence is also obtained by performing conjugation and negation on the first sequence. For example, the sending apparatus may also sequentially perform conjugation and negation on the first sequence. In this case, the third sequence and the fifth sequence may be considered as a same sequence.

B3: The sending apparatus performs an identity operation on the first sequence to obtain the third sequence. In other words, the third sequence is obtained by performing the identity operation on the first sequence. The sending apparatus performs negation on the first sequence to obtain the fifth sequence. In other words, the fifth sequence is obtained by performing negation on the first sequence.

B4: The sending apparatus performs conjugation on the first sequence to obtain the third sequence. In other words, the third sequence is obtained by performing conjugation on the first sequence. The sending apparatus may perform conjugation and negation on the first sequence. For example, the sending apparatus sequentially performs conjugation and negation on the first sequence to obtain the fifth sequence. In other words, the fifth sequence is obtained by performing conjugation and negation on the first sequence.

B1 to B4 are example manners of determining the third sequence and the fifth sequence. In practice, a manner of determining the third sequence and the fifth sequence is not limited, and a quantity of first-type sequences included in the K first-type sequences is not limited either (that is, a value of K is not limited).

The following describes an example manner of determining, by the sending apparatus, one of the P first-type sequences based on the second sequence (for ease of distinguishing, one of the P first-type sequences is referred to as a sequence Sq2 below).

C1: The sending apparatus performs an identity operation on the second sequence to obtain the sequence Sq2. In other words, the sequence Sq2 is obtained by performing the identity operation on the second sequence.

For example, the second sequence is B, and the sequence Sq2 is a result of the identity operation on the second sequence. In this case, the sequence Sq2 may be denoted as +B.

C2: The sending apparatus performs an identity operation, conjugation, and flipping on the second sequence to obtain the sequence Sq2. In other words, the sequence Sq2 is obtained by performing the identity operation, conjugation, and flipping on the second sequence. In C2, an order of performing the identity operation, conjugation, and flipping on the second sequence is not specifically limited.

For example, the second sequence is B, and the sequence Sq2 may be a result of sequentially performing flipping, conjugation, and the identity operation on the second sequence. In this case, the sequence Sq2 may be denoted as +flip{B}*.

Alternatively, the second sequence is B, and the sequence Sq2 may be a result of sequentially performing flipping, flipping, conjugation, and the identity operation on the second sequence. In this case, the sequence Sq2 may be denoted as +flip{flip{B} }*.

C3: The sending apparatus performs negation, conjugation, and flipping on the second sequence to obtain the sequence Sq2. In other words, the sequence Sq2 is obtained by performing negation, conjugation, and flipping on the second sequence. In C3, an order of performing negation, flipping, and conjugation on the second sequence is not limited either.

For example, the second sequence is B, and the sequence Sq2 may be a result of sequentially performing flipping, conjugation, and negation on the second sequence. In this case, the sequence Sq2 may be denoted as -flip {B} *.

Alternatively, the second sequence is B, and the sequence Sq2 may be a result of sequentially performing flipping, flipping, conjugation, and negation on the second sequence. In this case, the sequence Sq2 may be denoted as -flip {flip {B} } *.

C4: The sending apparatus performs an identity operation and conjugation on the second sequence to obtain the sequence Sq2. In other words, the sequence Sq2 may be obtained by performing the identity operation and conjugation on the second sequence. In C4, an order of performing the identity operation and conjugation on the second sequence is not limited either.

For example, the second sequence is B, and the sequence Sq2 may be a result of sequentially performing conjugation and the identity operation on the second sequence. In this case, the sequence Sq2 may be denoted as +B*.

C5: The sending apparatus performs negation and conjugation on the second sequence to obtain the sequence Sq2. In other words, the sequence Sq2 may be obtained by performing negation and conjugation on the second sequence. In C5, an order of performing negation and conjugation on the second sequence is not limited either.

For example, the second sequence is B, and the sequence Sq2 may be a result of sequentially performing conjugation and negation on the second sequence. In this case, the sequence Sq2 may be denoted as -B*.

C1 to C5 are examples of determining the sequence Sq2 based on the second sequence. In practice, there may alternatively be a plurality of manners of determining the sequence Sq2. Details are not described herein. In addition, a manner of determining any one of the P first-type sequences by the sending apparatus is similar to the manner of determining, by the sending apparatus, the sequence Sq2 based on the second sequence. Details are not described herein again.

An example in which the P first-type sequences may include a fourth sequence and a sixth sequence is used below to describe content of determining the fourth sequence and the sixth sequence based on the second sequence.

D1: The sending apparatus performs an identity operation on the second sequence to obtain the fourth sequence. In other words, the fourth sequence is obtained by performing the identity operation on the second sequence. The sending apparatus performs an identity operation on the second sequence to obtain the sixth sequence. In this case, the fourth sequence and the sixth sequence may be considered as a same sequence.

D2: The sending apparatus performs conjugation on the second sequence to obtain the fourth sequence. In other words, the fourth sequence is obtained by performing conjugation on the second sequence. The sending apparatus performs conjugation on the second sequence to obtain the sixth sequence. In this case, the fourth sequence and the sixth sequence may be considered as a same sequence.

D3: The sending apparatus performs an identity operation on the second sequence to obtain the fourth sequence. In other words, the fourth sequence is obtained by performing the identity operation on the second sequence. The sending apparatus performs negation on the second sequence to obtain the sixth sequence. In other words, the sixth sequence is obtained by performing negation on the second sequence.

D4: The sending apparatus performs conjugation and negation on the second sequence. In other words, the fourth sequence may be obtained by performing conjugation and negation on the second sequence. For example, the sending apparatus sequentially performs conjugation and negation on the second sequence to obtain the fourth sequence. The sending apparatus performs conjugation on the second sequence. In other words, the sixth sequence is obtained by performing conjugation on the second sequence.

D1 to D4 are example manners of determining the fourth sequence and the sixth sequence. In practice, a manner of determining the fourth sequence and the sixth sequence is not limited, and a quantity of first-type sequences included in the P first-type sequences is not limited either (that is, a value of P is not limited).

Before determining the M first-type sequences, the sending apparatus needs to determine one or more of an identity operation, negation, conjugation, or flipping that is to be performed on the first sequence and the second sequence, that is, determine how to determine the M first-type sequences. The following describes example manners of determining, by the sending apparatus, how to determine the M first-type sequences.

F1: A manner of determining the M first-type sequences is preconfigured or predefined on the sending apparatus. For example, how to determine the M first-type sequences is predefined on the sending apparatus by using a protocol.

For example, a first orthogonal code is preconfigured on the sending apparatus, and the first orthogonal code is used to determine the M first-type sequences. In other words, this may be understood as that the first orthogonal code indicates a manner of determining the M first-type sequences.

In a possible implementation, the first orthogonal code indicates one or more of an identity operation, negation, conjugation, or flipping that is to be performed on the first sequence and/or the second sequence. In other words, the first orthogonal code indicates specific content of processing to be performed on the first sequence and/or the second sequence.

For example, the first orthogonal code includes w(n), where n=0, ..., F-1, F represents a total length of the first orthogonal code, n is an index of an orthogonal code in the first orthogonal code, w(n) is +1, -1, +flip{j}, -flip{j}, +j, or -j, j represents conjugation, and flip represents flipping. For example, F may be the same as a quantity of first-type sequences included in the M first-type sequences. For example, values of F and M are the same.

Optionally, a part (for example, F/2) of orthogonal codes in the first orthogonal code may be used to determine the K first-type sequences, and another part (for example, F/2) of orthogonal codes in the first orthogonal code may be used to determine the P first-type sequences of the M first-type sequences. Examples are used below for description.

For example, the M first-type sequences include two first-type sequences, for example, a third sequence and a fourth sequence. The third sequence may be one of the K first-type sequences, the fourth sequence may be one of the P first-type sequences, and the third sequence and the fourth sequence may be considered as a group of first-type sequences.

In this case, the first orthogonal code may be, for example, **[*wₜ*(0) *wₜ*(1)],** where ***wₜ***(**0**) is +1, and ***wₜ*(1)** is +flip{j}, -flip{j}, +j, or -j. Alternatively, the first orthogonal code may be, for example, **[*wₜ*(0) *wₜ*(1)],** where ***wₜ***(**0**) is +A, and ***wₜ***(**1**) is +flip{jB}, -flip{jB}, +jB, or -jB. A represents the first sequence, and B represents the second sequence.

For another example, the M first-type sequences include four first-type sequences, for example, a third sequence, a fourth sequence, a fifth sequence, and a sixth sequence. The third sequence and the fifth sequence may be two of the K first-type sequences, the fourth sequence and the sixth sequence may be two of the P first-type sequences, the third sequence and the fourth sequence may be considered as a group of first-type sequences, and the fifth sequence and the sixth sequence may be considered as a group of first-type sequences.

In this case, the first orthogonal code may be, for example, [***w_{f}***(**0**) ***w_{f}***(**1**) ***w_{f}***(**2**) ***w_{f}***(**3**)], where ***w_{f}***(**0**) is +1 or +j, ***w_{f}***(**1**) is +1, -1, +j, or -j, ***w_{f}***(**2**) is +1, -1, +j, or -j, and ***w_{f}***(**3**) is +1, -1, +j, or -j.

For example, Table 1 below shows an example of the first orthogonal code provided in this embodiment of this application.

**Table 1**

| [***w***_{f}(**0**) ... ***w***_{f}(**3**)] | [***w***ₜ(**0**) ***w***ₜ(**1**)] |
|---|---|
| [+1 +1 +1 +1] | [+1 *+flip*{*j*}] |
| [+1 -1 +1 -1] | [+1 *+flip*{*j*}] |
| [+1 +1 -1 -1] | [+1 *+flip*{*j*}] |
| [+1 -1 +1 -1] | [+1 *+flip*{*j*}] |
| [+1 +1 +1 +1] | [+1 *-flip*{*j*}] |
| [+1 -1 +1 -1] | [+1 *-flip*{*j*}] |
| [+1 +1 +1 +1] | [+1 *-flip*{*j*}] |

As shown in Table 1, the first orthogonal code may be any orthogonal code in Table 1, for example, any orthogonal code below [wt(0) wt(1)] or any orthogonal code below [*w*_{f}(0) ... *w*_{f}(3)]. In addition, flip{j} in Table 1 may also be denoted as j*flip{} or the like. A specific form of the orthogonal code is not specifically limited in this embodiment of this application.

For example, Table 2 below shows an example of the first orthogonal code provided in this embodiment of this application.

**Table 2**

| [***w***_{f}(**0**) ... ***w***_{f}(**3**)] | [***w***ₜ(**0**) ***w*ₜ(1)]** |
|---|---|
| [+1 +1 +1 +1] | [+1 +*j*] |
| [+*j* -*j* +*j* -*j*] | [+1 +*j*] |
| [+1 +1 -1 -1] | [+1 -*j*] |
| [+*j* -*j* -*j* +*j*] | [+1 -*j*] |

Optionally, [***w_{f}***(**0**) ... ***w***_{f}(**3**)] in Table 2 may alternatively be [+1 *+j* +1 *+j*], [+1 *-j* +1 *- j*], [*+*1 +*j* -1 -*j*], or [*+j -j -j +j*].

As shown in Table 2, the first orthogonal code may be any orthogonal code in Table 2, for example, any orthogonal code below [wt(0) wt(1)] or any orthogonal code below [*w*_{f}(0) ... *w*_{f}(3)].

In another possible implementation, in addition to indicating one or more of the identity operation, negation, conjugation, or flipping that is to be performed on the first sequence and/or the second sequence, the first orthogonal code may further indicate whether an object to be processed is the first sequence or the second sequence. In other words, the first orthogonal code indicates specific content of processing, and may further indicate whether to process the first sequence or the second sequence.

For example, the first orthogonal code includes **w**(**n**), where n=0, ..., F-1, F represents a total length of the first orthogonal code, n is an index of an orthogonal code in the first orthogonal code, w(n) is +1, -1, +flip{j}, -flip{j}, +j, or -j, j represents conjugation, and flip represents flipping.

Optionally, a part (for example, F/2) of orthogonal codes in the first orthogonal code may be used to determine the K first-type sequences, and another part (for example, F/2) of orthogonal codes in the first orthogonal code may be used to determine the P first-type sequences of the M first-type sequences. Examples are used below for description.

For example, the M first-type sequences include two first-type sequences, for example, a third sequence and a fourth sequence. The third sequence may be one of the K first-type sequences, the fourth sequence may be one of the P first-type sequences, and the third sequence and the fourth sequence may be considered as a group of first-type sequences.

In this case, the first orthogonal code may be, for example, [***wₜ***(**0**) ***wₜ***(**1**)], where ***wₜ***(**0**) is +A, and ***wₜ***(**1**) is +flip{jB}, -flip{jB}, +jB, or -jB. A represents the first sequence, and B represents the second sequence.

For another example, the M first-type sequences include four first-type sequences, for example, a third sequence, a fourth sequence, a fifth sequence, and a sixth sequence. The third sequence and the fifth sequence may be two of the K first-type sequences, the fourth sequence and the sixth sequence may be two of the P first-type sequences, the third sequence and the fourth sequence may be considered as a group of first-type sequences, and the fifth sequence and the sixth sequence may be considered as a group of first-type sequences.

In this case, the first orthogonal code may be, for example, [***w_{f}***(**0**) ***w_{f}***(**1**) ***w_{f}***(**2**) ***w_{f}***(**3**)], where ***w_{f}***(**0**) is +A or +jB, ***w_{f}***(**1**) is +A, -B, +jA, or -jB, ***w_{f}***(**2**) is +A, -B, +jA, or -jB, and ***w_{f}***(**3**) is +A, -B, +jA, or -jB.

For example, Table 3 below shows an example of the first orthogonal code provided in this embodiment of this application.

**Table 3**

| [***w***_{f}(**0**) ... ***w***_{f}(**3**)] | [***w***ₜ(**0**) ***w*ₜ**(**1**)] |
|---|---|
| [+*A +B +A +B*] | [*+A +flip*{*jB*}] |
| [+*A -B +A -B*] | [*+A +flip*{*jB*}] |
| [+*A +B -A -B*] | [*+A +flip*{*jB*}] |
| [+*A -B +A -B*] | [*+A +flip*{*jB*}] |
| [+*A +A +A +A*] | [+*A -flip*{*jB*}] |
| [+*A -B +A -B*] | [+*A -flip*{*jB*}] |
| [+*A +B +A +B*] | [+*A -flip*{*jB*}] |

As shown in Table 3, the first orthogonal code may be any orthogonal code in Table 3, for example, any orthogonal code below [***w*ₜ**(**0**) ***w*ₜ**(**1**)] or any orthogonal code below [***w***_{f}(**0**) ... ***w*_{f}**(**3**)]. A in Table 3 may represent the first sequence, and B may represent the second sequence. In this case, the first orthogonal code may be considered as further indicating that each of the M first-type sequences is determined based on the first sequence or the second sequence.

For example, Table 4 below shows an example of the first orthogonal code provided in this embodiment of this application. In addition, flip{jB} in Table 3 may also be denoted as j*flip{B} or the like. A specific form of the orthogonal code is not specifically limited in this embodiment of this application.

**Table 4**

| [***w***_{f}(**0**) ... ***w***_{f}(**3**)] | [***w***ₜ(**0**) ***w***ₜ(**1**)] |
|---|---|
| [+*A +jB +B +jA*] | [+*A +jB*] |
| [+*B -jA +A -jB*] | [+*A +jB*] |
| [+*A +jB -B -jA*] | [+*B -jA*] |
| [+*B -jA -A +B*] | [+*B -jA*] |

As shown in Table 4, the first orthogonal code may be any orthogonal code in Table 4, for example, any orthogonal code below [***w***ₜ(**0**) ***w*ₜ**(**1**)] or any orthogonal code below [***w_{f}***(**0**) ... **w_{f}**(**3**)]. A in Table 4 may represent the first sequence, and B may represent the second sequence. In this case, the first orthogonal code may be considered as further indicating that each of the M first-type sequences is determined based on the first sequence or the second sequence.

F2: The sending apparatus determines, based on an indication of the network device, how to determine the M first-type sequences. F2 is applicable to a case in which the sending apparatus is a terminal device, a software module or a hardware module in a terminal device, or the like.

For example, the network device indicates first indication information to the sending apparatus. The first indication information indicates how to determine the M first-type sequences. In a possible implementation, the first indication information indicates the first orthogonal code. This is equivalent to that the first orthogonal code indicates how to determine the M first-type sequences. For content of the first orthogonal code, refer to the foregoing content of F1. Repeated descriptions are omitted herein.

The first indication information may directly or indirectly indicate the first orthogonal code. This is not limited. For example, the first indication information may include (or indicate) an identifier (or an index, or a number, or a sequence number) of the first orthogonal code. In this way, the sending apparatus can determine the first orthogonal code based on the identifier of the first orthogonal code. Alternatively, the first indication information includes (or indicates) an index or an identifier (or a logical identifier) of the first port, and the index or the identifier (or the logical identifier) of the first port may be used to determine the first orthogonal code. Correspondingly, the sending apparatus may determine the first orthogonal code based on the index or the identifier (or the logical identifier) of the first port. The identifier of the first orthogonal code may be understood as an identifier allocated to the first orthogonal code, or may be understood as an identifier (or an index, or a logical identifier) of a port (for example, the first port) associated with the first orthogonal code, or the like. This is not specifically limited.

For example, identifiers of a plurality of orthogonal codes and each orthogonal code corresponding to each of the identifiers of the plurality of orthogonal codes may be prestored on the sending apparatus. The plurality of orthogonal codes may be, for example, orthogonal codes in at least one of Table 1 to Table 4. In this way, after receiving the first indication information, the sending apparatus can determine the first orthogonal code from the plurality of orthogonal codes based on the identifier of the first orthogonal code.

The first indication information may be carried in radio resource control (radio resource control, RRC) signaling, a medium access control (medium access control, MAC) control element (control element, CE), downlink control information (downlink control information, DCI), dedicated signaling, or the like. This is not specifically limited.

In S701, an example of determining the M first-type sequences corresponding to the first port is used for description. In practice, the sending apparatus may determine M sequences of another type that correspond to another port (for example, a second port). For content of determining the M sequences of the another type that correspond to the another port (for example, the second port), refer to the content of determining the M first-type sequences of the first port in S701. Details are not described herein again. For example, the sending apparatus may determine, according to the manner of determining the M sequences of the first port, M second-type sequences corresponding to the second port. Alternatively, another sending apparatus may determine corresponding M sequences of another type. For a manner of determining the M sequences of the another type by the another sending apparatus, refer to the content of determining the M first-type sequences of the first port in S701. Details are not described herein again.

In another possible implementation, the M first-type sequences may be preconfigured or predefined on the sending apparatus, or the sending apparatus may directly obtain the M first-type sequences from another device (for example, the network device). In these cases, the sending apparatus may not need to perform step S701. To be specific, S701 is an optional step, and is indicated by a dashed line in FIG. 7.

S702: The sending apparatus respectively sends first-type reference signals of the first port to the receiving apparatus on the M resources, where there are a total of M first-type reference signals, and the M first-type reference signals are in a one-to-one correspondence with the M first-type sequences. Correspondingly, the receiving apparatus may receive the M first-type reference signals corresponding to the first port.

For example, if the sending apparatus is a network device and the receiving apparatus is a terminal device, all of the M first-type reference signals may be downlink reference signals. Alternatively, if the sending apparatus is a terminal device and the receiving apparatus is a network device, all of the M first-type reference signals may be uplink reference signals. This is not limited.

If the M resources are different, when the sending apparatus maps the M first-type sequences, the sending apparatus may directly sequentially map the M first-type sequences to the M resources, and send the M first-type sequences. This is equivalent to sending the M first-type reference signals. If the M resources are different, a manner of obtaining the M first-type reference signals and sending the M first-type reference signals also varies. Descriptions are separately provided below.

G1: The M resources are the M resources in the case 1 (to be specific, the M resources are the same in frequency domain but different in time domain).

In G1, the sending apparatus may sequentially map the M first-type sequences to the M resources (which may be equivalent to different time domain resources) in a plurality of manners, which are separately described below.

G1-1: Two first-type sequences in one group of first-type sequences of the M first-type sequences are mapped to different time domain resources (for example, symbols). When the time domain resources are symbols, this design may also be referred to as a double-symbol design.

For example, if the M first-type sequences include K groups of first-type sequences, two first-type sequences in each group of first-type sequences of the K groups of first-type sequences may be mapped to different time domain resources. In this case, each of the M first-type sequences is correspondingly mapped to (or occupies) one time domain resource. When each of the M first-type sequences includes D elements, one of the M first-type sequences is correspondingly mapped to (or occupies) one time domain resource. Optionally, two first-type sequences in one group of first-type sequences of the K groups of first-type sequences may correspond to respective CPs.

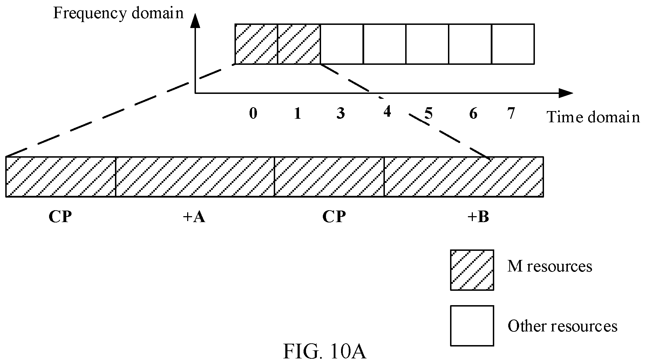

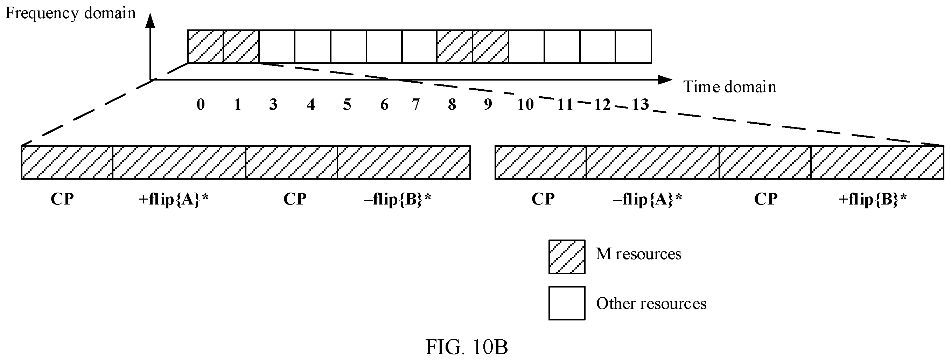

FIG. 10A and FIG. 10B are diagrams of mapping M first-type sequences to M resources according to an embodiment of this application.

In FIG. 10A, the following example is used for description: M is 2, and both K and P are 1. The M resources include two resources: a symbol 0 and a symbol 1. The M first-type sequences include a third sequence and a fourth sequence. The third sequence is an example of the K first-type sequences, and the fourth sequence is an example of the P first-type sequences. The third sequence is denoted as +A, and the fourth sequence is denoted as +B. The third sequence includes two elements, for example, a(0) and a(1). The fourth sequence includes two elements, for example, b(0) and b(1). The third sequence and the fourth sequence may be considered as a group of first-type sequences.

As shown in FIG. 10A, the sending apparatus may add a CP before the third sequence, and add a CP before the fourth sequence. The sending apparatus maps the CP and the third sequence to the symbol 0, and maps the CP and the fourth sequence to the symbol 1. Specifically, both the CP and the two elements a(0) and a(1) included in the third sequence are mapped to the symbol 0, and both the CP and the two elements b(0) and b(1) included in the fourth sequence are mapped to the symbol 1.

In FIG. 10B, the following example is used for description: M is 2, and both K and P are 2. The M resources include four resources: a symbol 0, a symbol 1, a symbol 8, and a symbol 9. The M first-type sequences include a third sequence, a fourth sequence, a fifth sequence, and a sixth sequence. The third sequence and the fifth sequence are an example of the K first-type sequences, and the fourth sequence and the sixth sequence are an example of the P first-type sequences. The third sequence is denoted as +flip{A}*, the fourth sequence is denoted as - flip {B} *, the fifth sequence is denoted as -flip {A} *, and the sixth sequence is denoted as +flip{B}*. The third sequence includes two elements, for example, a(0) and a(1). The fourth sequence includes two elements, for example, b(0) and b(1). The fifth sequence includes two elements: c(0) and c(1). The sixth sequence includes two elements: d(0) and d(1). The third sequence and the fourth sequence may be considered as a group of first-type sequences, and the fifth sequence and the sixth sequence may be considered as a group of first-type sequences.

As shown in FIG. 10B, the sending apparatus may add a CP before the third sequence, add a CP before the fourth sequence, add a CP before the fifth sequence, and add a CP before the sixth sequence. The sending apparatus maps the CP and the third sequence to the symbol 0, maps the CP and the fourth sequence to the symbol 1, maps the CP and the fifth sequence to the symbol 8, and maps the CP and the sixth sequence to the symbol 9. Specifically, both the CP and the two elements a(0) and a(1) included in the third sequence are mapped to the symbol 0, both the CP and the two elements b(0) and b(1) included in the fourth sequence are mapped to the symbol 1, the CP and the two elements c(0) and c(1) included in the fifth sequence are mapped to the symbol 8, and the CP and the two elements d(0) and d(1) included in the sixth sequence are mapped to the symbol 9.

G1-2: One group of first-type sequences of the M first-type sequences may be mapped to a same time domain resource. When the time domain resource is a symbol, this design may also be referred to as a single-symbol design.

For example, if the M first-type sequences include K groups of first-type sequences, two first-type sequences in each group of first-type sequences of the K groups of first-type sequences may be mapped to a same time domain resource. In this case, one group of first-type sequences may occupy one time domain resource. When each of the M first-type sequences includes N elements, one group of first-type sequences of the M first-type sequences occupies one time domain resource. This may be understood as that all of N elements included in any first-type sequence in the group of first-type sequences are mapped to the time domain resource. According to the content described above, optionally, one of the M resources may occupy 1/Q time domain unit in time domain. Therefore, one group of first-type sequences may occupy 1/Q time domain unit. Optionally, two first-type sequences in one group of first-type sequences of the K groups of first-type sequences may correspond to respective CPs, or two first-type sequences in one group of first-type sequences may share a CP. This is not limited.

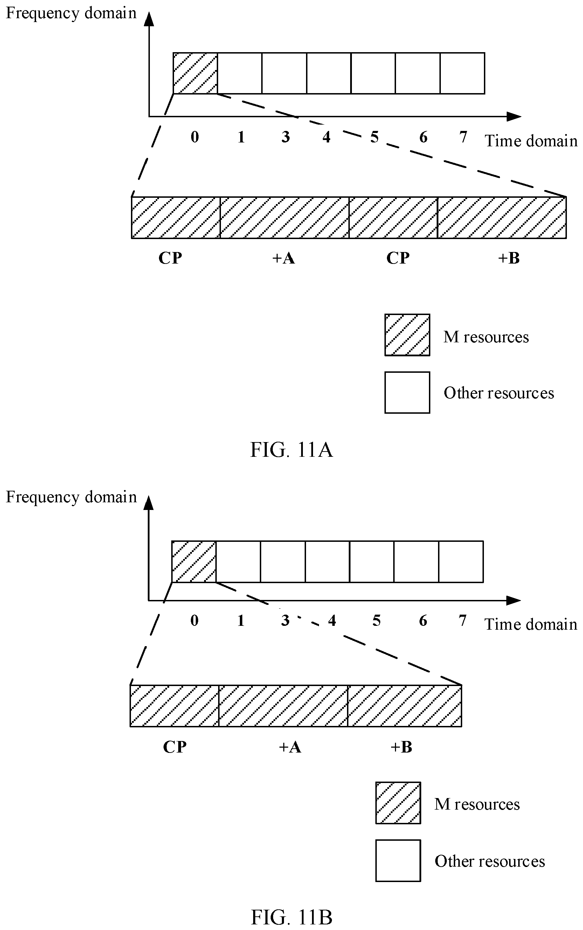

FIG. 11A and FIG. 11B are diagrams of mapping M first-type sequences to M resources according to an embodiment of this application. In FIG. 11A and FIG. 11B, the following example is used for description: M is 2, and both K and P are 1. The M resources include a resource corresponding to a symbol 0. A third sequence is an example of the K first-type sequences, and a fourth sequence is an example of the P first-type sequences. The M first-type sequences include the third sequence and the fourth sequence. The third sequence is denoted as +A, and the fourth sequence is denoted as +B. The third sequence includes two elements, for example, a(0) and a(1). The fourth sequence includes two elements, for example, b(0) and b(1). The third sequence and the fourth sequence may be considered as a group of first-type sequences.

FIG. 11A shows a case in which two first-type sequences in one group of first-type sequences may correspond to respective CPs. As shown in FIG. 11A, the sending apparatus may add a CP before the third sequence, and add a CP before the fourth sequence. The sending apparatus maps both the CP and the third sequence, and the CP and the fourth sequence to the symbol 0. To be specific, both elements a(0) and a(1) included in the third sequence are mapped to the symbol 0, and the two elements b(0) and b(1) included in the fourth sequence are also mapped to the symbol 0. In this case, each group of first-type sequences of the M first-type sequences occupies 1/Q symbol.

FIG. 11B shows a case in which two first-type sequences in one group of first-type sequences may share a CP. As shown in FIG. 11B, the sending apparatus may add a CP before the third sequence and the fourth sequence. The sending apparatus maps all of the CP, the third sequence, and the fourth sequence to the symbol 0. In this case, each group of first-type sequences of the M first-type sequences equivalently occupies 1/Q symbol. Specifically, both elements a(0) and a(1) included in the third sequence are mapped to the symbol 0, and the two elements b(0) and b(1) included in the fourth sequence are also mapped to the symbol 0.

G2: The M resources are the M resources in the case 2 (to be specific, the M resources are the same in time domain but different in frequency domain).

For example, if the M first-type sequences include K groups of first-type sequences, two first-type sequences in each group of first-type sequences of the K groups of first-type sequences may be respectively mapped to different frequency domain resources corresponding to a same time domain resource. In this case, one group of first-type sequences may occupy two frequency domain resources. When each of the M first-type sequences includes D elements, one group of first-type sequences may occupy one frequency domain resource. This may be understood as that all of D elements included in each first-type sequence in the group of first-type sequences are mapped to the frequency domain resource. When the frequency domain resource includes D frequency domain units, the D elements included in each first-type sequence in the group of first-type sequences may be respectively mapped to the D frequency domain units. According to the content described above, optionally, one of the M resources may occupy 1/S frequency domain unit in frequency domain. Therefore, one group of first-type sequences may occupy 1/S frequency domain unit.

In G2, after determining the M first-type sequences, the sending apparatus may perform inverse discrete Fourier transform (inverse discrete fourier transform, IDFT) on the M first-type sequences, to transform the M first-type sequences to time domain, and send signals obtained through transformation to time domain. This is equivalent to sending the M first-type reference signals.

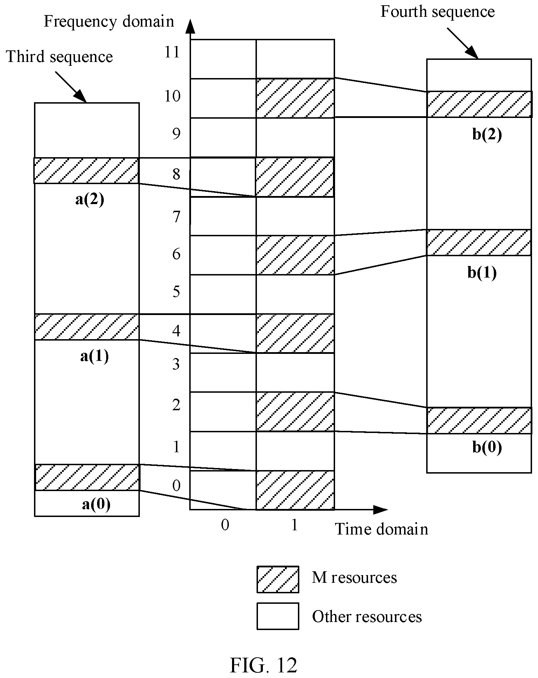

FIG. 12 is a diagram of mapping M first-type sequences to M resources according to an embodiment of this application. In FIG. 12, the following example is used for description: M is 2, and both K and P are 1. Each of the M resources includes three frequency domain units. The M resources include: a resource 1, where the resource 1 includes three frequency domain units corresponding to a symbol 1: a subcarrier 0, a subcarrier 4, and a subcarrier 8; and a resource 2 including three frequency domain units corresponding to the symbol 1: a subcarrier 2, a subcarrier 6, and a subcarrier 10. The M first-type sequences include a third sequence and a fourth sequence. The third sequence is an example of the K first-type sequences, and the fourth sequence is an example of the P first-type sequences. The third sequence is denoted as +A, and the fourth sequence is denoted as +B. The third sequence includes three elements, for example, a(0), a(1), and a(2). The fourth sequence includes three elements, for example, b(0), b(1), and b(2). The third sequence and the fourth sequence may be considered as a group of first-type sequences.

As shown in FIG. 12, the sending apparatus maps the third sequence to the resource 1, to be specific, maps the third sequence to the subcarrier 0, the subcarrier 4, and the subcarrier 8 corresponding to the symbol 1; and maps the fourth sequence to the resource 2, to be specific, maps the fourth sequence to the subcarrier 2, the subcarrier 6, and the subcarrier 10 corresponding to the symbol 1. Specifically, the element a(0) in the third sequence is mapped to the subcarrier 0 of the symbol 1, the element a(1) in the third sequence is mapped to the subcarrier 4 of the symbol 1, the element a(2) in the third sequence is mapped to the subcarrier 8 of the symbol 1, the element b(0) in the fourth sequence is mapped to the subcarrier 2 of the symbol 1, the element b(1) in the fourth sequence is mapped to the subcarrier 6 of the symbol 1, and the element b(2) in the fourth sequence is mapped to the subcarrier 10 of the symbol 1.

G3: The M resources correspond to the M resources in the case 3 (to be specific, the M resources are different in time domain and different in frequency domain).

For example, if the M first-type sequences include K groups of first-type sequences, two first-type sequences in each group of first-type sequences of the K groups of first-type sequences may be respectively mapped to different time-frequency resources. In this case, one group of first-type sequences may occupy two time-frequency resources. When each of the M first-type sequences includes D elements, one group of first-type sequences may occupy one time-frequency resource. This may be understood as that all of D elements included in each first-type sequence in the group of first-type sequences are mapped to the time-frequency resource. When the time-frequency resource includes D resource units, the D elements included in each first-type sequence in the group of first-type sequences may be respectively mapped to the D resource units.

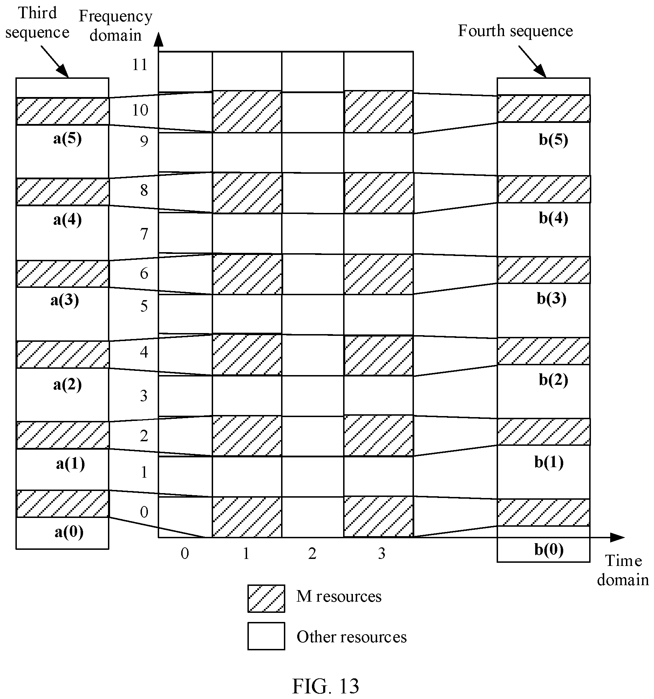

FIG. 13 is a diagram of mapping M first-type sequences to M resources according to an embodiment of this application.

In FIG. 13, the following example is used for description: M is 2, and both K and P are 1. Each of the M resources includes six frequency domain units. The M resources include: a resource 1, where the resource 1 includes six frequency domain units corresponding to a symbol 1: a subcarrier 0, a subcarrier 2, a subcarrier 4, a subcarrier 6, a subcarrier 8, and a subcarrier 10; and a resource 2 including six frequency domain units: a subcarrier 0, a subcarrier 2, a subcarrier 4, a subcarrier 6, a subcarrier 8, and a subcarrier 10 corresponding to a symbol 3. The M first-type sequences include a third sequence and a fourth sequence. The third sequence is an example of the K first-type sequences, and the fourth sequence is an example of the P first-type sequences. The third sequence is denoted as +A, and the fourth sequence is denoted as +B. The third sequence includes six elements, for example, a(0) to a(5). The fourth sequence includes six elements, for example, b(0) to b(5). The third sequence and the fourth sequence may be considered as a group of first-type sequences.

As shown in FIG. 13, the sending apparatus may map the third sequence to the resource 1, to be specific, map the third sequence to the subcarrier 0, the subcarrier 2, the subcarrier 4, the subcarrier 6, the subcarrier 8, and the subcarrier 10 corresponding to the symbol 1; and map the fourth sequence to the resource 2, to be specific, map the fourth sequence to the subcarrier 0, the subcarrier 2, the subcarrier 4, the subcarrier 6, the subcarrier 8, and the subcarrier 10 corresponding to the symbol 3. Specifically, the sending apparatus maps the element a(0) in the third sequence to the subcarrier 0 of the symbol 1, maps the element a(1) to the subcarrier 2 of the symbol 1, maps the element a(2) to the subcarrier 4 of the symbol 1, maps the element a(3) to the subcarrier 6 of the symbol 1, maps the element a(4) to the subcarrier 8 of the symbol 1, maps the element a(5) to the subcarrier 10 of the symbol 1, maps the element b(0) in the fourth sequence to the subcarrier 0 of the symbol 3, maps the element b(1) to the subcarrier 2 of the symbol 3, maps the element b(2) to the subcarrier 4 of the symbol 3, maps the element b(3) to the subcarrier 6 of the symbol 3, maps the element b(4) to the subcarrier 8 of the symbol 3, and maps the element b(5) to the subcarrier 10 of the symbol 3.

After the sending apparatus sends the M first-type reference signals, correspondingly, the receiving apparatus may receive the M first-type reference signals. Because the M first-type reference signals pass through a channel environment, the M first-type reference signals received by the receiving apparatus may be actually different from the M first-type reference signals sent by the sending apparatus. For ease of distinguishing, the M first-type reference signals received by the receiving apparatus are referred to as received M first-type reference signals below. The receiving apparatus may estimate a channel of the first port based on the received M first-type reference signals. For example, the receiving apparatus may combine the received M first-type reference signals to obtain a first-type received signal of the first port, and estimate the channel of the first port based on the first-type received signal of the first port.

The embodiment shown in FIG. 7 is described by using an example in which the sending apparatus sends the M first-type reference signals corresponding to the first port. In practice, another sending apparatus may further send corresponding M reference signals of another type on the M resources. For example, the another sending apparatus may also determine M sequences of the another type that correspond to the another sending apparatus, and respectively send the M reference signals of the another type of the another apparatus on the M resources. For content of the M reference signals of the another type that correspond to the another apparatus, refer to the content of the M first-type reference signals described in S702. Details are not described herein again. In this way, the M resources are multiplexed. In this case, the receiving apparatus may also receive the M reference signals of the another type of the another sending apparatus, and determine or estimate a channel of the another sending apparatus based on the received M reference signals of the another sending apparatus. For example, the receiving apparatus may determine a received signal of the another type based on the received M reference signals of the another sending apparatus, and estimate the channel of the another sending apparatus based on the received signal of the another type. Alternatively, the receiving apparatus may jointly estimate the channel of the first port and the channel of the another sending apparatus based on the first-type received signal of the first port and the received signal of the another type of the another sending apparatus.

Alternatively, the sending apparatus may further send, on the M resources, M reference signals corresponding to another port (for example, the second port). For example, the sending apparatus may also determine the M second-type sequences corresponding to the second port, and respectively send, on the M resources, M second-type reference signals corresponding to the second port. For content of the reference signals corresponding to the another port (for example, the second port), refer to the content of the M first-type reference signals described in S702. Details are not described herein again. In this way, the M resources are multiplexed. In this case, the receiving apparatus may determine a second-type received signal of the second port based on the M second-type reference signals, and estimate a channel of the second port based on the second-type received signal of the second port. Alternatively, the receiving apparatus may jointly estimate the channel of the first port and the channel of the second port based on the first-type received signal of the first port and the second-type received signal of the second port.

This embodiment of this application provides a manner of generating a sequence corresponding to a reference signal, to improve flexibility of generating a sequence or a reference signal. In addition, when the first sequence and the second sequence are complementary sequences, in this embodiment of this application, accuracy of channel estimation performed by the receiving apparatus can be improved, and a mechanism that supports complementary sequences and code division multiplexing is also provided, so that effect of receiving a signal by the receiving apparatus is better. In addition, a resource can be multiplexed to transmit reference signals for a plurality of ports or a plurality of users, to reduce resource overheads of the reference signals, and help improve overall utilization of resources in a communication system.

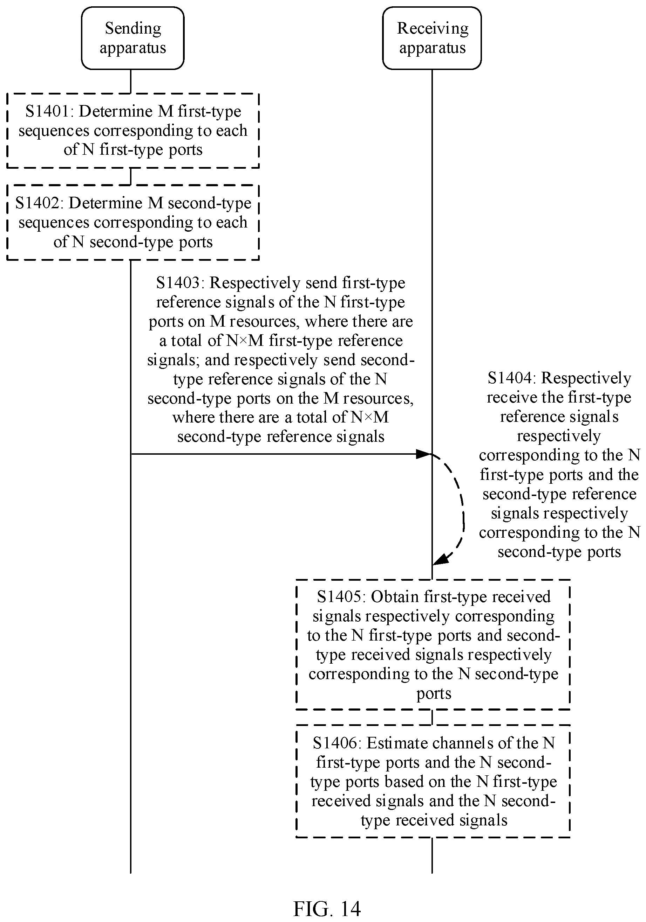

With reference to a diagram of a communication method shown in FIG. 14, the following describes a process of interaction between a sending apparatus and a receiving apparatus in a case in which the sending apparatus separately sends reference signals corresponding to a plurality of ports. FIG. 14 shows an example in which the plurality of ports include N first-type ports and N second-type ports, where N is a positive integer. The following describes steps shown in FIG. 14.

S1401: The sending apparatus determines M first-type sequences corresponding to each of the N first-type ports.

N is an integer greater than or equal to 1. In other words, the N first-type ports may include one or more ports. The N first-type ports may include, for example, the first port in FIG. 7. It can be understood that the N first-type ports may represent N ports. For example, all of the N ports may be DMRS ports or SRS ports.

The sending apparatus may determine M first-type sequences corresponding to each of the N first-type ports. By analogy, a total of N×M first-type sequences are obtained. N is a positive integer less than or equal to M. Optionally, N may be M/2. For example, M is 2, and N may be 1; or M is 4, and N may be 2; or M is 8, and N may be 4. K first-type sequences of the M first-type sequences corresponding to each first-type port may be obtained by performing at least one of an identity operation, negation, conjugation, or flipping on a first sequence, and P first-type sequences of the M first-type sequences corresponding to each first-type port may be obtained by performing at least one of an identity operation, negation, conjugation, or flipping on a second sequence. For content of K, P, and M, refer to the content described in FIG. 7. Repeated descriptions are omitted. For specific content of determining, by the sending apparatus, the M first-type sequences corresponding to each first-type port, refer to the content of determining, by the sending apparatus, the M first-type sequences corresponding to the first port in FIG. 7. Repeated descriptions are omitted. For content of the first sequence and the second sequence, respectively refer to the content of the first sequence and the second sequence described in FIG. 7. Repeated descriptions are omitted.

An example in which the N first-type ports include a port d1 and a port d3 and a value of M is 4 is used to describe the M first-type sequences corresponding to each of the N first-type ports.

For example, M first-type sequences corresponding to the port d1 include a sequence 3, a sequence 4, a sequence 5, and a sequence 6, and M first-type sequences corresponding to the port d3 include a sequence 7, a sequence 8, a sequence 9, and a sequence 10. The sequence 3 and the sequence 5 may be considered as an example of K first-type sequences of the port d1, the sequence 4 and the sequence 6 may be considered as an example of P first-type sequences of the port d1, the sequence 8 and the sequence 10 may be considered as an example of K first-type sequences of the port d3, and the sequence 7 and the sequence 9 may be considered as an example of P first-type sequences of the port d1.

The following describes example forms of the sequence 3, the sequence 4, the sequence 5, the sequence 6, the sequence 7, the sequence 8, the sequence 9, and the sequence 10 by using an example in which the first sequence is A and the second sequence is B.

For example, the sequence 3 is +A, the sequence 4 is +B, the sequence 5 is +A, the sequence 6 is +B, the sequence 7 is +B, the sequence 8 is +A, the sequence 9 is -B, and the sequence 10 is -A. That is, the sequence 3 and the sequence 5 may be the same, and the sequence 4 and the sequence 6 may be the same.

The foregoing is an example of the M first-type sequences corresponding to the port d1 and the M first-type sequences corresponding to the port d3. In practice, this is not specifically limited.

S1402: The sending apparatus determines M second-type sequences corresponding to each of the N second-type ports.

The N second-type ports include one or more ports, and the N second-type ports include, for example, a second port. It can be understood that the N second-type ports merely represent N ports, and types of the N first-type ports and the N second-type ports are not limited. For example, the N first-type ports and the N second-type ports are of a same type or different types. Specifically, for example, both the N second-type ports and the N first-type ports are DMRS ports or CSI-RS ports. This is not limited.

The sending apparatus may determine M second-type sequences corresponding to each of the N second-type ports. By analogy, a total of N×M second-type sequences are obtained. K second-type sequences of the M second-type sequences corresponding to each second-type port may be obtained by performing at least one of an identity operation, negation, conjugation, or flipping on the second sequence, and P second-type sequences of the M second-type sequences corresponding to each second-type port may be obtained by performing at least one of an identity operation, negation, conjugation, or flipping on the second sequence. For specific content of determining, by the sending apparatus, the M second-type sequences corresponding to each second-type port, refer to the content of determining, by the sending apparatus, the M first-type sequences corresponding to the first port in FIG. 7. Repeated descriptions are omitted herein.

An example in which the N second-type ports include a port d2 and a port d4 and a value of M is 4 is used to describe the M second-type sequences corresponding to each of the N second-type ports.

For example, M second-type sequences corresponding to the port d2 include a sequence 11, a sequence 12, a sequence 13, and a sequence 14, and M second-type sequences corresponding to the port d4 include a sequence 15, a sequence 16, a sequence 17, and a sequence 18.

The following describes example forms of the sequence 11, the sequence 12, the sequence 13, the sequence 14, the sequence 15, the sequence 16, the sequence 17, and the sequence 18 by using an example in which the first sequence is A and the second sequence is B. The sequence 12 and the sequence 14 may be considered as an example of K second-type sequences corresponding to the port d2, the sequence 11 and the sequence 13 may be considered as an example of P second-type sequences corresponding to the port d2, the sequence 15 and the sequence 17 may be considered as an example of K second-type sequences corresponding to the port d4, and the sequence 16 and the sequence 18 may be considered as an example of P second-type sequences corresponding to the port d4.

For example, the sequence 11 is +B*, the sequence 12 is -A*, the sequence 13 is +B*, the sequence 14 is -A*, the sequence 15 is +A*, the sequence 16 is -B*, the sequence 17 is -A*, and the sequence 18 is +B*.

The foregoing is an example of the M second-type sequences corresponding to the port d2 and the M second-type sequences corresponding to the port d4. In practice, this is not specifically limited.

The sending apparatus may perform S1401 and S1402 in any order. This is not limited. For example, the sending apparatus synchronously performs S1401 and S1402, or the sending apparatus performs S1401 before S1402, or the sending apparatus performs S1402 before S1402.

In another possible implementation, the M first-type sequences corresponding to each of the N first-type ports and the M second-type sequences of each of the N second-type ports may be preconfigured or predefined on the sending apparatus; or the sending apparatus may obtain, from another device (for example, a network device), the M first-type sequences corresponding to each of the N first-type ports and the M second-type sequences of each of the N second-type ports. In this case, the sending apparatus may not need to perform step S1401 or S1402. To be specific, both S1401 and S1402 are optional steps, and are indicated by dashed lines in FIG. 14.

S1403: The sending apparatus respectively sends first-type reference signals of the N first-type ports on M resources, where there are a total of N×M first-type reference signals; and respectively sends second-type reference signals of the N second-type ports on the M resources, where there are a total of N×M second-type reference signals.

The M first-type sequences corresponding to each of the N first-type ports are respectively mapped to the M resources. By analogy, the N×M first-type sequences may be mapped. This may also be understood as that the M resources are used to transmit M first-type reference signals corresponding to each of the N first-type ports, or may be understood as that each of the M resources is used for mapping one first-type sequence corresponding to each of the N first-type ports. The M second-type sequences corresponding to each of the N second-type ports may be further mapped to the M resources. By analogy, the N×M second-type sequences may be mapped. This may also be understood as that the M resources are used to transmit M second-type reference signals corresponding to each of the N second-type ports, or may be understood as that each of the M resources is used for mapping one second-type sequence corresponding to each of the N second-type ports. For content of the M resources, refer to the content of the M resources described in FIG. 7. Repeated descriptions are omitted. All of the N×M second-type reference signals and the N×M first-type reference signals may be reference signals of a same type, or may be reference signals of different types. This is not specifically limited. For example, all of the N×M second-type reference signals and the N×M first-type reference signals are DMRSs or CSI-RSs. This is not specifically limited. S1403 may be considered as an implementation of multiplexing the M resources by the N first-type ports and the N second-type ports.

That the N×M first-type sequences are in a one-to-one correspondence with the N×M first-type reference signals may also be understood as that each of the N×M first-type sequences is used to determine one of the N×M first-type reference signals, and that the N×M second-type sequences are in a one-to-one correspondence with the N×M second-type reference signals indicates that each of the N×M second-type sequences is used to determine one of the N×M second-type reference signals.

For example, the sending apparatus sends, on one of the M resources, the M first-type reference signals corresponding to each of the N first-type ports and the M second-type reference signals corresponding to each of the N second-type ports, and so on. For content of sending, by the sending apparatus on one of the M resources, one first-type reference signal corresponding to each of the N first-type ports, and content of sending one second-type reference signal corresponding to each of the N second-type ports, refer to the content of sending, on one of the M resources, one first-type reference signal corresponding to the first port described in FIG. 7. Details are not described herein again.

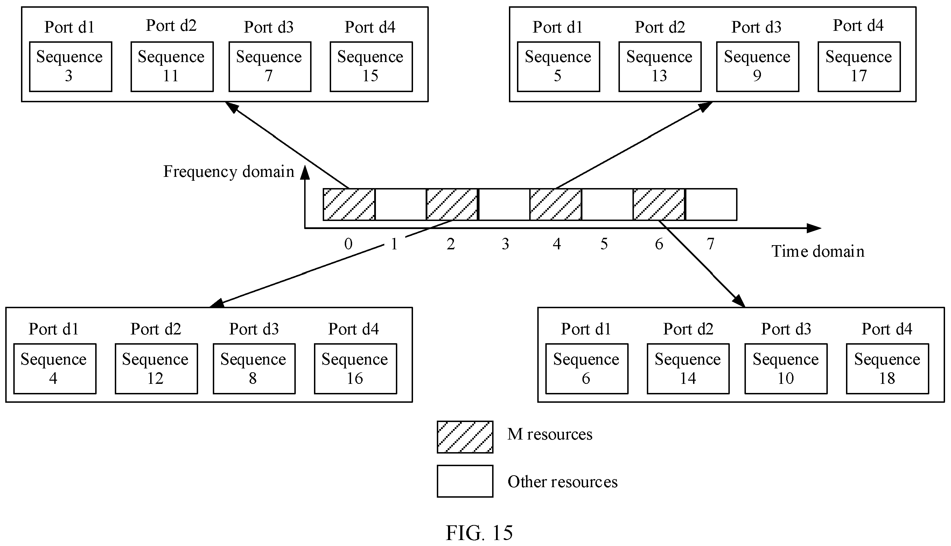

FIG. 15 is a diagram of sending reference signals according to an embodiment of this application. In FIG. 15, for example, a value of M is 4, the M resources correspond to four symbols (for example, a symbol 0, a symbol 2, a symbol 4, and a symbol 6), the N first-type ports include a port d1 and a port d3, the N second-type ports include a port d2 and a port d4, M first-type sequences corresponding to the port d1 include a sequence 3, a sequence 4, a sequence 5, and a sequence 6, M first-type sequences corresponding to the port d3 include a sequence 7, a sequence 8, a sequence 9, and a sequence 10, M second-type sequences corresponding to the port d2 include a sequence 11, a sequence 12, a sequence 13, and a sequence 14, and M second-type sequences corresponding to the port d4 include a sequence 15, a sequence 16, a sequence 17, and a sequence 18. For content of the sequence 3 to the sequence 18, refer to content of the sequence 3 and the sequence 18 described above respectively. In addition, the sequence 2 and the sequence 18 are merely intended to identify sequences, but some of the sequence 3 to the sequence 18 may be the same. This is not limited.

As shown in FIG. 15, the symbol 0 is used for mapping the sequence 3 corresponding to the port d1 (to be specific, the symbol 0 is used to transmit a reference signal corresponding to the sequence 3), the sequence 11 corresponding to the port d2 (to be specific, the symbol 0 is further used to transmit a reference signal corresponding to the sequence 11), the sequence 7 corresponding to the port d3 (to be specific, the symbol 0 is further used to transmit a reference signal corresponding to the sequence 7), and the sequence 15 corresponding to the port d4 (to be specific, the symbol 0 is further used to transmit a reference signal corresponding to the sequence 15).

The symbol 2 is used for mapping the sequence 4 corresponding to the port d1 (to be specific, the symbol 2 is used to transmit a reference signal corresponding to the sequence 4), the sequence 12 corresponding to the port d2 (to be specific, the symbol 2 is further used to transmit a reference signal corresponding to the sequence 12), the sequence 8 corresponding to the port d3 (to be specific, the symbol 2 is further used to transmit a reference signal corresponding to the sequence 8), and the sequence 16 corresponding to the port d4 (to be specific, the symbol 2 is further used to transmit a reference signal corresponding to the sequence 16).

The symbol 4 is used for mapping the sequence 5 corresponding to the port d1 (to be specific, the symbol 4 is used to transmit a reference signal corresponding to the sequence 5), the sequence 13 corresponding to the port d2 (to be specific, the symbol 4 is further used to transmit a reference signal corresponding to the sequence 13), the sequence 9 corresponding to the port d3 (to be specific, the symbol 4 is further used to transmit a reference signal corresponding to the sequence 9), and the sequence 17 corresponding to the port d4 (to be specific, the symbol 4 is further used to transmit a reference signal corresponding to the sequence 17).

The symbol 6 is used for mapping the sequence 6 corresponding to the port d1 (to be specific, the symbol 6 is used to transmit a reference signal corresponding to the sequence 6), the sequence 14 corresponding to the port d2 (to be specific, the symbol 6 is further used to transmit a reference signal corresponding to the sequence 14), the sequence 10 corresponding to the port d3 (to be specific, the symbol 6 is further used to transmit a reference signal corresponding to the sequence 10), and the sequence 18 corresponding to the port d4 (to be specific, the symbol 6 is further used to transmit a reference signal corresponding to the sequence 18).

In FIG. 15, four ports are used as an example. In practice, a quantity of ports is not limited.

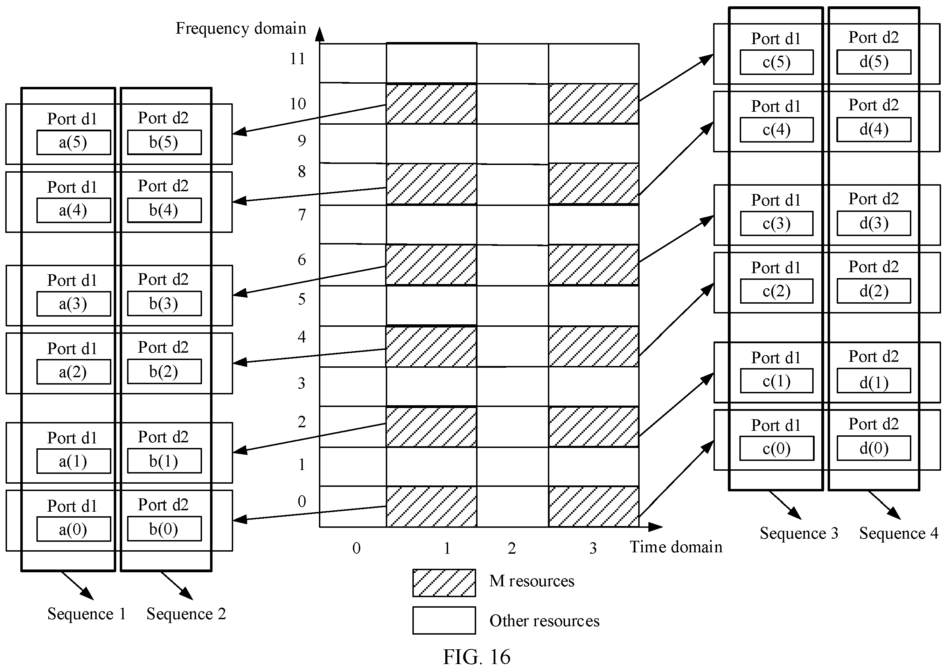

FIG. 16 is a diagram of sending reference signals according to an embodiment of this application. In FIG. 16, a value of M is 2, and the M resources include two resources: a resource 1 and a resource 2. The resource 1 includes six subcarriers (for example, a subcarrier 0, a subcarrier 2, a subcarrier 4, a subcarrier 6, a subcarrier 8, and a subcarrier 10) corresponding to a symbol 1. The resource 2 includes six subcarriers (for example, a subcarrier 0, a subcarrier 2, a subcarrier 4, a subcarrier 6, a subcarrier 8, and a subcarrier 10) corresponding to a symbol 3. The N first-type ports include a port d1, and the N second-type ports include a port d2. The port d1 corresponds to a sequence 1 and a sequence 3, and M second-type sequences corresponding to the port d2 include a sequence 2 and a sequence 4. The sequence 1 to the sequence 4 are merely intended to identify sequences, and whether the sequences are the same is not limited.

The sequence 1 may include six elements: elements a(0) to a(5). The sequence 2 may include six elements: elements b(0) to b(5). The sequence 3 may include six elements: elements c(0) to b(5). The sequence 4 includes six elements: elements d(0) to d(5).

As shown in FIG. 16, the resource 1 may be used for mapping the sequence 1 corresponding to the port d1 and the sequence 2 corresponding to the port d2. In other words, the resource 1 is used for mapping elements in the sequence 1 and the sequence 2. For example, the element a(0) in the sequence 1 and the element b(0) in the sequence 2 are mapped to the subcarrier 0 in the symbol 1, the element a(1) in the sequence 1 and the element b(1) in the sequence 2 are mapped to the subcarrier 2 in the symbol 1, the element a(2) in the sequence 1 and the element b(2) in the sequence 2 are mapped to the subcarrier 4 in the symbol 1, the element a(3) in the sequence 1 and the element b(3) in the sequence 2 are mapped to the subcarrier 6 in the symbol 1, the element a(4) in the sequence 1 and the element b(4) in the sequence 2 are mapped to the subcarrier 8 in the symbol 1, and the element a(5) in the sequence 1 and the element b(5) in the sequence 2 are mapped to the subcarrier 10 in the symbol 1.

The resource 2 may be used for mapping the sequence 3 corresponding to the port d1 and the sequence 4 corresponding to the port d2. In other words, the resource 2 is used for mapping elements in the sequence 3 and the sequence 4. For example, the element c(0) in the sequence 1 and the element d(0) in the sequence 2 are mapped to the subcarrier 0 in the symbol 3, the element c(1) in the sequence 1 and the element d(1) in the sequence 2 are mapped to the subcarrier 2 in the symbol 3, the element c(2) in the sequence 1 and the element d(2) in the sequence 2 are mapped to the subcarrier 4 in the symbol 3, the element c(3) in the sequence 1 and the element d(3) in the sequence 2 are mapped to the subcarrier 6 in the symbol 3, the element c(4) in the sequence 1 and the element d(4) in the sequence 2 are mapped to the subcarrier 8 in the symbol 3, and the element c(5) in the sequence 1 and the element d(5) in the sequence 2 are mapped to the subcarrier 10 in the symbol 3.

In FIG. 16, two ports are used as an example. In practice, a quantity of ports is not limited.

S 1404: The receiving apparatus respectively receives the first-type reference signals of the N first-type ports and the second-type reference signals of the N second-type ports on the M resources. The receiving apparatus may cumulatively receive N×M first-type reference signals (referred to as received N×M first-type reference signals below) and N×M second-type reference signals (referred to as received N×M second-type reference signals below) on the M resources.

S1405: The receiving apparatus obtains first-type received signals respectively corresponding to the N first-type ports and second-type received signals respectively corresponding to the N second-type ports. The receiving apparatus may cumulatively obtain N first-type received signals and N second-type received signals.

For example, the receiving apparatus may obtain a first-type received signal of each first-type port based on the M first-type reference signals corresponding to each of the N first-type ports (namely, M first-type reference signals corresponding to each first-type port among the received N×M first-type reference signals). In other words, the first-type received signal of each first-type port may be determined based on M reference signals received by the first-type port on the M resources. By analogy, the receiving apparatus may obtain the N first-type received signals. The N first-type received signals are in a one-to-one correspondence with the N first-type ports.

Similarly, the receiving apparatus may obtain a second-type received signal of each second-type port based on the M second-type reference signals corresponding to each of the N second-type ports (namely, M second-type reference signals corresponding to each second-type port among the received N×M second-type reference signals). In other words, the second-type received signal of each second-type port may be determined based on M reference signals received by the second-type port on the M resources. By analogy, the receiving apparatus may obtain the N second-type received signals. The N second-type received signals are in a one-to-one correspondence with the N second-type ports.

For example, the N first-type ports include a first port, and the N second-type ports include a second port. M first-type sequences corresponding to the first port on the M resources are sequentially +X₁, +X₂, +X₁, and +X₂. M second-type sequences corresponding to the second port on the M resources are sequentially +X₂*, -X₁*, +X₂*, and -X₁*.

In this example, a first-type received signal Y[1] of the first port may be expressed as the following relationship (1): $Y \left[1\right] = {H}_{1} {X}_{1} + {H}_{2} {X}_{2} + {H}_{3} {X}_{1} + {H}_{4} {X}_{2}$ (1)

A second-type received signal Y[2] of the second port may be expressed as the following relationship (2): $Y \left[2\right] = {H}_{1} {X}_{2}^{*} - {H}_{2} {X}_{1}^{*} + {H}_{3} {X}_{2}^{*} - {H}_{4} {X}_{1}^{*}$ (2)

For another example, the N first-type ports include a first port and a third port, and the N second-type ports include a second port and a fourth port. M first-type sequences corresponding to the first port on the M resources are sequentially +X₁, +X₂, +X₁, and +X₂. M first-type sequences corresponding to the third port on the M resources are sequentially +X₂, +X₁, -X₂, and -X₁. M second-type sequences corresponding to the second port on the M resources are sequentially +X₂*, -X₁*, +X₂*, and -X₁*. M second-type sequences corresponding to the fourth port on the M resources are sequentially +X₁*, -X₂*, -X₁*, and +X₂*.

In this example, a first-type received signal Y[1] of the first port may be expressed as the content shown in the foregoing relationship (1): Y[1]=H₁X₁+H₂X₂+H₃X₁+H₄X₂. A second-type received signal Y[2] of the second port may be expressed as the content shown in the foregoing relationship (2): Y[2]=H₁X₂*-H₂X₁*+H₃X₂*-H₄X₁.

A first-type received signal Y[3] of the third port may be expressed as content shown in the following relationship (3): $Y \left[3\right] = {H}_{1} {X}_{2} + {H}_{2} {X}_{1} - {H}_{3} {X}_{2} - {H}_{4} {X}_{1}$ (3)

A first-type received signal Y[4] of the fourth port may be expressed as content shown in the following relationship (4): $Y \left[4\right] = {H}_{1} {X}_{1}^{*} - {H}_{2} {X}_{2}^{*} - {H}_{3} {X}_{1}^{*} + {H}_{4} {X}_{2}^{*}$ (4)

S1406: The receiving apparatus estimates channels of the N first-type ports and the N second-type ports based on the N first-type received signals and the N second-type received signals.

For example, the receiving apparatus may jointly estimate (or determine) channels of the N first-type ports and channels of the N second-type ports based on N first-type results, N second-type results, N third-type results, and N fourth-type results. For example, the receiving apparatus may perform elimination, through addition or subtraction, on the N first-type results, the N second-type results, the N third-type results, and the N fourth-type results, to estimate a channel of each of the N first-type ports and a channel of each of the N second-type ports. In other words, the receiving apparatus may process the N first-type received signals and the N second-type received signals, and then perform addition and/or subtraction on processed signals to obtain a linear value of a channel response.

The following separately describes example manners of determining, by the receiving apparatus, the N first-type results, the N second-type results, the N third-type results, and the N fourth-type results.

J1: The receiving apparatus may obtain one first-type result based on each of the N first-type received signals and a seventh reference signal, where a total of N first-type results are obtained.

For example, one first-type result is a product of one first-type received signal and the seventh reference signal, or may be a product of one first-type received signal and a conjugate of the seventh reference signal.

The seventh reference signal may correspond to one of the received N×M first-type reference signals. For example, the seventh reference signal is one of the received N×M first-type reference signals, or is a reference signal that is sent by the sending apparatus and that corresponds to one of the received N×M first-type reference signals. Alternatively, the seventh reference signal is the first sequence or the second sequence. This is not specifically limited.

For example, the N first-type received signals include one piece of first-type received information shown in the foregoing relationship (1) and one first-type received signal shown in the foregoing relationship (3). The seventh reference signal may be, for example, X₁. In this case, the N first-type results may include one first-type result shown in the following relationship (5) and one first-type result in content shown in the following relationship (6): $Y \left[1\right] {X}_{1}^{*} = {H}_{1} {X}_{1} {X}_{1}^{*} + {H}_{2} {X}_{2} {X}_{1}^{*} + {H}_{3} {X}_{1} {X}_{1}^{*} + {H}_{4} {X}_{2} {X}_{1}^{*}$ (5) $Y \left[3\right] {X}_{1}^{*} = {H}_{1} {X}_{2} {X}_{1}^{*} + {H}_{2} {X}_{1} {X}_{1}^{*} - {H}_{3} {X}_{2} {X}_{1}^{*} + {H}_{4} {X}_{1} {X}_{1}^{*}$ (6)

J2: The receiving apparatus may obtain one second-type result based on each of the N first-type received signals and an eighth reference signal, where a total of N second-type results are obtained.

For example, one second-type result is a product of one first-type received signal and the eighth reference signal, or may be a product of one first-type received signal and a conjugate of the eighth reference signal.

The eighth reference signal may correspond to one of the received N×M first-type reference signals, and the eighth reference signal is different from the seventh reference signal. For example, if the seventh reference signal is one of the received N×M first-type reference signals, the eighth reference signal is another one of the received N×M first-type reference signals. Alternatively, if the seventh reference signal is a reference signal that is sent by the sending apparatus and that corresponds to one of the received N×M first-type reference signals, the eighth reference signal is a reference signal that is sent by the sending apparatus and that corresponds to another one of the received N×M first-type reference signals. Alternatively, if the seventh reference signal is the first sequence, the eighth reference signal is the second sequence. Alternatively, if the seventh reference signal is a conjugate of the first sequence, the eighth reference signal is a conjugate of the second sequence. Alternatively, if the seventh reference signal is the second sequence, the eighth reference signal is the first sequence. Alternatively, if the seventh reference signal is a conjugate of the second sequence, the eighth reference signal is a conjugate of the first sequence.

The seventh reference signal and the eighth reference signal are signals used for channel solving. Therefore, any signals that can implement channel solving may be considered as the seventh reference signal and the eighth reference signal. The foregoing is merely example content of the seventh reference signal and the eighth reference signal. In practice, content of the seventh reference signal and the eighth reference signal is not limited.

For example, the N first-type received signals include one piece of first-type received information shown in the foregoing relationship (1) and one first-type received signal shown in the foregoing relationship (3). The eighth reference signal may be, for example, X₂. In this case, the N second-type results may include one second-type result shown in the following relationship (7) and one second-type result in content shown in the following relationship (8): $Y \left[1\right] {X}_{2}^{*} = {H}_{1} {X}_{1} {X}_{2}^{*} + {H}_{2} {X}_{2} {X}_{2}^{*} + {H}_{3} {X}_{1} {X}_{2}^{*} + {H}_{4} {X}_{2} {X}_{2}^{*}$ (7) $Y \left[3\right] {X}_{2}^{*} = {H}_{1} {X}_{2} {X}_{2}^{*} + {H}_{2} {X}_{1} {X}_{2}^{*} - {H}_{3} {X}_{2} {X}_{2}^{*} - {H}_{4} {X}_{1} {X}_{2}^{*}$ (8)

J3: The receiving apparatus obtains one third-type result based on each of the N second-type received signals and a conjugate of the seventh reference signal, where a total of N third-type results are obtained. For content of the seventh reference signal, refer to the content described in the foregoing J1. Repeated descriptions are omitted.

For example, the N second-type received signals include one piece of first-type received information shown in the foregoing relationship (2) and one second-type received signal shown in the foregoing relationship (4). The seventh reference signal may be, for example, X₁. In this case, the N third-type results may include one third-type result shown in the following relationship (9) and one third-type result in content shown in the following relationship (10): $Y \left[2\right] {X}_{1} = {H}_{1} {X}_{2}^{*} {X}_{1} - {H}_{2} {X}_{1}^{*} {X}_{1} + {H}_{3} {X}_{2}^{*} {X}_{1} - {H}_{4} {X}_{1}^{*} {X}_{1}$ (9) $Y \left[4\right] {X}_{1} = {H}_{1} {X}_{1}^{*} {X}_{1} - {H}_{2} {X}_{2}^{*} {X}_{1} - {H}_{3} {X}_{1}^{*} {X}_{1} + {H}_{4} {X}_{2}^{*} {X}_{1}$ (10)

J4: Obtain one fourth-type result based on the N second-type received signals and a conjugate of the eighth reference signal, where a total of N fourth-type results are obtained. For content of the eighth reference signal, refer to the content described in the foregoing J2. Repeated descriptions are omitted.

For example, the N second-type received signals include one piece of first-type received information shown in the foregoing relationship (2) and one second-type received signal shown in the foregoing relationship (4). The eighth reference signal may be, for example, X₂. In this case, the N fourth-type results may include one third-type result shown in the following relationship (11) and one third-type result in content shown in the following relationship (12): $Y \left[2\right] {X}_{2} = {H}_{1} {X}_{2}^{*} {X}_{2} - {H}_{2} {X}_{1}^{*} {X}_{2} + {H}_{3} {X}_{2}^{*} {X}_{2} - {H}_{4} {X}_{1}^{*} {X}_{2}$ (11) $Y \left[4\right] {X}_{2} = {H}_{1} {X}_{1}^{*} {X}_{2} - {H}_{2} {X}_{2}^{*} {X}_{2} - {H}_{3} {X}_{1}^{*} {X}_{2} + {H}_{4} {X}_{2}^{*} {X}_{2}$ (12)

For example, if the N first-type results include the relationship (5), the N second-type results include the relationship (7), the N third-type results include the relationship (9), and the N fourth-type results include the content shown in the relationship (11), the receiving apparatus performs elimination through addition or subtraction by combining the relationships, to obtain the channels of the N first-type ports and the channels of the N second-type ports through estimation.

For example, the N first-type results include the relationships (5) and (6), the N second-type results include the relationships (7) and (8), the N third-type results include the relationships (9) and (10), and the N fourth-type results include the content shown in the relationships (11) and (12). In this case, the receiving apparatus performs elimination through addition or subtraction by combining the relationships, to obtain the channels of the N first-type ports and the channels of the N second-type ports through estimation.

For example, the receiving apparatus may add the relationship (5) to the relationship (12) to obtain the following relationship (13). " 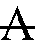 " in the following descriptions indicates that A is eliminated based on an operation. $\begin{matrix}Y \left[1\right] {X}_{1}^{*} + Y \left[2\right] {X}_{2} = {H}_{1} {X}_{1} {X}_{1}^{*} + {H}_{3} {X}_{1} {X}_{1}^{*} + {H}_{1} {X}_{2}^{*} {X}_{2} + \\ {H}_{3} {X}_{2}^{*} {X}_{2} = {H}_{1} \left({\left‖{X}_{1}\right‖}^{2}+{\left‖{X}_{2}\right‖}^{2}\right) + {H}_{3} \left({\left‖{X}_{1}\right‖}^{2}+{\left‖{X}_{2}\right‖}^{2}\right)\end{matrix}$ (13)

The receiving apparatus may subtract the relationship (7) from the relationship (9) to obtain the following relationship (14): $\begin{matrix}Y \left[1\right] {X}_{2}^{*} - Y \left[2\right] {X}_{1} = {H}_{2} {X}_{2} {X}_{2}^{*} + {H}_{4} {X}_{2} {X}_{2}^{*} + \\ {H}_{2} {X}_{1}^{*} {X}_{1} + {H}_{4} {X}_{1}^{*} {X}_{1} = {H}_{2} \left({\left‖{X}_{1}\right‖}^{2}+{\left‖{X}_{2}\right‖}^{2}\right) + {H}_{4} \left({\left‖{X}_{1}\right‖}^{2}+{\left‖{X}_{2}\right‖}^{2}\right) \\ \end{matrix}$ (14)

The receiving apparatus may subtract the relationship (6) from the relationship (12) to obtain the following relationship (15): $\begin{matrix}Y \left[3\right] {X}_{1}^{*} - Y \left[4\right] {X}_{2} = {H}_{2} {X}_{1} {X}_{1}^{*} - {H}_{4} {X}_{1} {X}_{1}^{*} + {H}_{2} {X}_{2}^{*} {X}_{2} \\ - {H}_{4} {X}_{2}^{*} {X}_{2} = {H}_{2} \left({\left‖{X}_{1}\right‖}^{2}+{\left‖{X}_{2}\right‖}^{2}\right) - {H}_{4} \left({\left‖{X}_{1}\right‖}^{2}+{\left‖{X}_{2}\right‖}^{2}\right)\end{matrix}$ (15)

The receiving apparatus may add the relationship (8) to the relationship (10) to obtain the following relationship (16): $\begin{matrix}Y \left[3\right] {X}_{2}^{*} + Y \left[4\right] {X}_{1} = {H}_{1} {X}_{2} {X}_{2}^{*} - {H}_{3} {X}_{2} {X}_{2}^{*} + {H}_{1} {X}_{1} {X}_{1}^{*} - \\ {H}_{3} {X}_{1}^{*} {X}_{1} = {H}_{1} \left({\left‖{X}_{1}\right‖}^{2}+{\left‖{X}_{2}\right‖}^{2}\right) - {H}_{3} \left({\left‖{X}_{1}\right‖}^{2}+{\left‖{X}_{2}\right‖}^{2}\right)\end{matrix}$ (16)

The receiving apparatus may add the relationship (14) to the relationship (15) to obtain the following relationship (17): $\begin{matrix}Y \left[1\right] {X}_{2}^{*} - Y \left[2\right] {X}_{1} + Y \left[3\right] {X}_{1}^{*} - Y \left[4\right] {X}_{2} = 2 {H}_{2} \left({\left‖{X}_{1}\right‖}^{2}+{\left‖{X}_{2}\right‖}^{2}\right) , and therefore {H}_{2} = \\ \left(Y\left[1\right]{X}_{2}^{*}-Y\left[2\right]{X}_{1}+Y\left[3\right]{X}_{1}^{*}-Y\left[4\right]{X}_{2}\right) / 2 \left({\left‖{X}_{1}\right‖}^{2}+{\left‖{X}_{2}\right‖}^{2}\right)\end{matrix}$ (17)

The receiving apparatus may subtract the relationship (14) from the relationship (15) to obtain the following relationship (18): $\begin{matrix}Y \left[1\right] {X}_{2}^{*} - Y \left[2\right] {X}_{1} - Y \left[3\right] {X}_{1}^{*} + Y \left[4\right] {X}_{2} = 2 {H}_{4} \left({\left‖{X}_{1}\right‖}^{2}+{\left‖{X}_{2}\right‖}^{2}\right) , and therefore {H}_{4} = \\ \left(Y\left[1\right]{X}_{2}^{*}-Y\left[2\right]{X}_{1}-Y\left[3\right]{X}_{1}^{*}+Y\left[4\right]{X}_{2}\right) / 2 \left({\left‖{X}_{1}\right‖}^{2}+{\left‖{X}_{2}\right‖}^{2}\right)\end{matrix}$ (18)

The receiving apparatus may add the relationship (13) to the relationship (16) to obtain the following relationship (19): $\begin{matrix}Y \left[1\right] {X}_{1}^{*} + Y \left[2\right] {X}_{2} + Y \left[3\right] {X}_{2}^{*} + Y \left[4\right] {X}_{1} = 2 {H}_{1} \left({\left‖{X}_{1}\right‖}^{2}+{\left‖{X}_{2}\right‖}^{2}\right) , and therefore {H}_{1} = \\ \left(Y\left[1\right]{X}_{1}^{*}+Y\left[2\right]{X}_{2}+Y\left[3\right]{X}_{2}^{*}+Y\left[4\right]{X}_{1}\right) / 2 \left({\left‖{X}_{1}\right‖}^{2}+{\left‖{X}_{2}\right‖}^{2}\right)\end{matrix}$ (19)

The receiving apparatus may subtract the relationship (13) from the relationship (16) to obtain the following relationship (20): $\begin{matrix}Y \left[1\right] {X}_{1}^{*} + Y \left[2\right] {X}_{2} - Y \left[3\right] {X}_{2}^{*} - Y \left[4\right] {X}_{1} = 2 {H}_{3} \left({\left‖{X}_{1}\right‖}^{2}+{\left‖{X}_{2}\right‖}^{2}\right) , and therefore {H}_{3} = \\ \left(Y\left[1\right]{X}_{1}^{*}+Y\left[2\right]{X}_{2}-Y\left[3\right]{X}_{2}^{*}-Y\left[4\right]{X}_{1}\right) / 2 \left({\left‖{X}_{1}\right‖}^{2}+{\left‖{X}_{2}\right‖}^{2}\right)\end{matrix}$ (20)

In this way, the receiving apparatus can learn that a channel of the first port is **H₁**, a channel of the second port is **H₂**, a channel of the third port is **H₃**, and a channel of the fourth port is **H₄**. Certainly, the relationship (13) to the relationship (20) are examples of calculation manners of estimating the channels of the N first-type ports and the N second-type ports by the receiving apparatus. In practice, there may be a plurality of calculation manners of estimating the channels of the N first-type ports and the N second-type ports by the receiving apparatus. This is not specifically limited in embodiments of this application.

In an embodiment, S 1405 may be an independent embodiment. The embodiment provides a mechanism of estimating the channels of the N first-type ports and the N second-type ports by the receiving apparatus.

S1405 and S1406 are optional steps, and are indicated by dashed lines in FIG. 14.

In FIG. 14, an example in which the sending apparatus sends reference signals respectively corresponding to a plurality of ports is used. In practice, the plurality of ports may be replaced with a plurality of sending apparatuses. In this case, the plurality of sending apparatuses may separately determine sequences respectively corresponding to the plurality of sending apparatuses; determine, based on the respective sequences, reference signals respectively corresponding to the plurality of sending apparatuses; and send, on the M resources, the reference signals respectively corresponding to the plurality of sending apparatuses. Correspondingly, the receiving apparatus may receive the reference signals respectively corresponding to the plurality of sending apparatuses, and estimate channels respectively corresponding to the plurality of sending apparatuses. For processing processes of the plurality of sending apparatuses and the receiving apparatus, refer to the content shown in FIG. 14. Details are not described herein again.

Embodiments of this application provide a manner of generating a sequence, to improve flexibility of generating a sequence or a reference signal. In addition, when a first sequence and a second sequence are complementary sequences, in embodiments of this application, accuracy of channel estimation performed by a receiving apparatus can be improved. In addition, embodiments of this application further support multi-port or multi-user code division multiplexing, so that a resource can be multiplexed to transmit reference signals for a plurality of ports or a plurality of users, to reduce resource overheads of the reference signals, and help improve overall utilization and an overall capacity of resources in a communication system.

Embodiments of this application provide a communication solution. In this solution, an orthogonal code is redesigned, so that a receiving apparatus can perform, based on the orthogonal code, at least one of an identity operation, negation, conjugation, and flipping on a first sequence to obtain a sequence corresponding to a reference signal, and/or perform at least one of an identity operation, negation, conjugation, and flipping on a second sequence to obtain a sequence corresponding to a reference signal, to provide another orthogonal code design and provide another manner of generating a sequence.

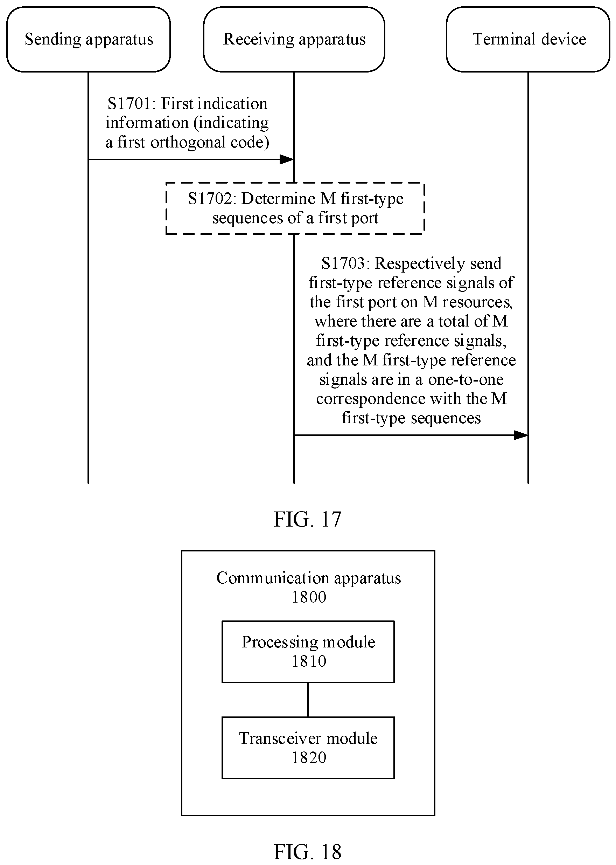

Descriptions are provided below with reference to a diagram of a communication method shown in FIG. 17.

S1701: A sending apparatus sends first indication information to a receiving apparatus. Correspondingly, the receiving apparatus receives the first indication information from the sending apparatus. The first indication information indicates a first orthogonal code. For content of the first orthogonal code, refer to the content of the first orthogonal code described in FIG. 7. Repeated descriptions are omitted. For content of the first indication information, also refer to the content of the first indication information described in FIG. 7. Repeated descriptions are omitted.

In this embodiment of this application, an example in which one receiving apparatus needs to send a reference signal is used. In practice, a quantity of receiving apparatuses is not limited. If another receiving apparatus needs to send a reference signal, correspondingly, the sending apparatus may further indicate, to the another receiving apparatus, an orthogonal code corresponding to the another receiving apparatus. Alternatively, if the receiving apparatus further needs to send a reference signal of another port, the first indication information may further indicate an orthogonal code corresponding to the another port. For example, if the receiving apparatus further needs to send a reference signal corresponding to a second port, the first indication information may further indicate a second orthogonal code, and the second orthogonal code may be used to determine M second-type sequences of the second port; or the sending apparatus may separately send second indication information to the receiving apparatus, and the second indication information indicates the second orthogonal code. This is not specifically limited.

S 1702: The receiving apparatus determines M first-type sequences of a first port.

For content of determining the M first-type sequences of the first port by the receiving apparatus and content of the M first-type sequences, respectively refer to the content of determining the M first-type sequences of the first port and the content of the M first-type sequences that are described in FIG. 7. Repeated descriptions are omitted.

S1703: The receiving apparatus respectively sends first-type reference signals of the first port on M resources, where there are a total of M first-type reference signals, and the M first-type reference signals are in a one-to-one correspondence with the M first-type sequences.

For content of the M resources, content of the M first-type reference signals, and content of sending the first-type reference signals of the first port by the receiving apparatus, refer to the content of the M first-type reference signals and the content of sending the first-type reference signals of the first port by the sending apparatus that are described in FIG. 7. Repeated descriptions are omitted herein.

Correspondingly, a terminal device may respectively receive the first-type reference signals of the first port on the M resources, and may cumulatively obtain received M first-type reference signals. Then the terminal device may estimate a channel of the first port based on the M first-type reference signals.

When the sending apparatus indicates, to another receiving apparatus, an orthogonal code corresponding to the another receiving apparatus, the another receiving apparatus may also respectively send, on the M resources, reference signals of another type that correspond to the another receiving apparatus. In this case, the terminal device may estimate channels of a plurality of receiving apparatuses by combining reference signals corresponding to the plurality of receiving apparatuses. For content of estimating the channels of the plurality of receiving apparatuses, refer to the content of estimating the channels of the plurality of ports described in FIG. 14. Details are not described herein again.

Alternatively, when the receiving apparatus further needs to send a reference signal of another port, the receiving apparatus may further respectively send first-type reference signals of the another port on the M resources based on the second orthogonal code or the like. In this case, the terminal device may estimate channels of a plurality of ports by combining reference signals corresponding to the plurality of ports. For content of estimating the channels of the plurality of ports, refer to the content of estimating the channels of the plurality of ports described in FIG. 14. Details are not described herein again.

It can be understood that, to implement the functions in the foregoing embodiments, a base station and a terminal include corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 18 to FIG. 20 are diagrams of structures of three communication apparatuses according to embodiments of this application. The communication apparatus may be configured to implement the functions of the sending apparatus, the receiving apparatus, or the network device in the foregoing method embodiments, and therefore can also achieve the beneficial effects in the foregoing method embodiments. In embodiments of this application, the communication apparatus may be the network device or the terminal device in FIG. 3, the first network device or the second network device in FIG. 4, the first terminal device, the second terminal device, the third terminal device, or the fourth terminal device in FIG. 5, the first terminal device, the second terminal device, the third terminal device, or the fourth terminal device in FIG. 6, or the like, or may be a software module or a hardware module (for example, a chip) used in the foregoing device. Alternatively, the communication apparatus may be the terminal device or the network device in FIG. 3, the terminal device in FIG. 4, the network device in FIG. 5, the fifth terminal device in FIG. 6, or the like, or may be a software module or a hardware module (for example, a chip) used in the foregoing device. Alternatively, the communication apparatus may be the network device in FIG. 3, the first network device or the second network device in FIG. 4, the network device in FIG. 5, the network device in FIG. 6, or the like, or may be a software module or a hardware module (for example, a chip) used in the foregoing network device.

As shown in FIG. 18, a communication apparatus 1800 includes a processing module 1810 and a transceiver module 1820. The communication apparatus 1800 is configured to implement the functions of the sending apparatus or the receiving apparatus in the method embodiment shown in FIG. 7, FIG. 14, or FIG. 17, or may be configured to implement the functions of the terminal device in the method embodiment shown in FIG. 17.

In a first embodiment, the communication apparatus 1800 is configured to implement the functions of the sending apparatus in the method embodiment shown in FIG. 7 or FIG. 14.

For example, the transceiver module 1820 may be configured to respectively send first-type reference signals of a first port on M resources. Optionally, the processing module 1810 may be configured to determine M first-type sequences of the first port.

For another example, the transceiver module 1820 may be configured to respectively send first-type reference signals of N first-type ports and second-type reference signals of N second-type ports on M resources. Optionally, the processing module 1810 may be configured to determine M first-type sequences of each of the N first-type ports, and determine M second-type sequences of each of the N second-type ports.

In a second embodiment, the communication apparatus 1800 is configured to implement the functions of the receiving apparatus in the method embodiment shown in FIG. 7 or FIG. 14.

For example, the transceiver module 1820 may be configured to respectively receive first-type reference signals of a first port on M resources. Optionally, the processing module 1810 may estimate a channel of the first port based on received M first-type reference signals.

For another example, the transceiver module 1820 may be configured to respectively receive first-type reference signals of N first-type ports and second-type reference signals of N second-type ports on M resources. Optionally, the processing module 1810 may be configured to perform the content of S1405 and S1406.

For another example, the processing module 1810 may be configured to perform the content of S1406. Optionally, the processing module 1810 is configured to perform step S1405, and the transceiver module 1820 may be configured to respectively receive first-type reference signals of N first-type ports and second-type reference signals of N second-type ports on M resources.

In a third embodiment, the communication apparatus 1800 is configured to implement the functions of the receiving apparatus in the method embodiment shown in FIG. 17.

For example, the transceiver module 1820 is configured to receive first indication information. Optionally, the processing module 1810 is configured to determine M first-type sequences of a first port, and the transceiver module 1820 is configured to respectively send first-type reference signals of the first port on M resources.

In a fourth embodiment, the communication apparatus 1800 is configured to implement the functions of the sending apparatus in the method embodiment shown in FIG. 17.

For example, the transceiver module 1820 is configured to send first indication information.

In a fifth embodiment, the communication apparatus 1800 is configured to implement the functions of the terminal device in the method embodiment shown in FIG. 17.

For example, the transceiver module 1820 is configured to respectively receive first-type reference signals of a first port on M resources.

For more detailed descriptions of the processing module 1810 and the transceiver module 1820, directly refer to related descriptions in the method embodiment shown in FIG. 7, FIG. 14, or FIG. 17. Details are not described herein again.

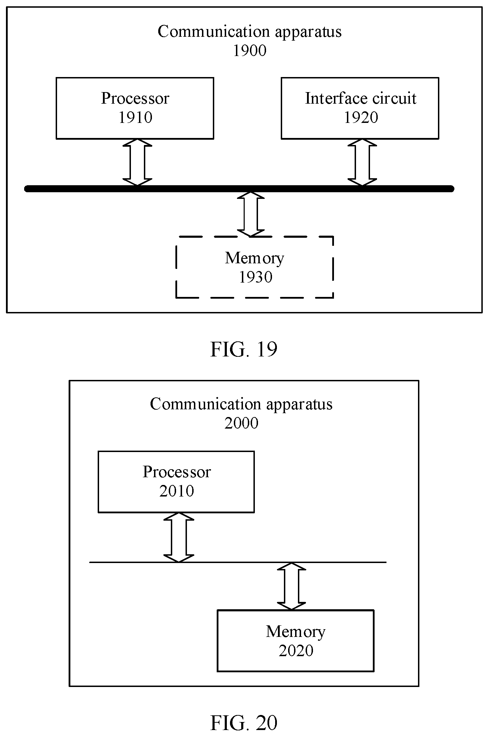

As shown in FIG. 19, a communication apparatus 1900 includes a processor 1910 and an interface circuit 1920. The processor 1910 and the interface circuit 1920 are coupled to each other. It can be understood that the interface circuit 1920 may be a transceiver or an input/output interface. Optionally, the communication apparatus 1900 may further include a memory 1930, configured to store instructions to be executed by the processor 1910, or store input data needed for running instructions by the processor 1910, or store data generated after the processor 1910 runs instructions. In FIG. 19, a dashed-line box indicates that the memory 1930 is optional.

When the communication apparatus 1900 is configured to implement the method shown in FIG. 7, FIG. 14, or FIG. 17, the processor 1910 is configured to implement the functions of the processing module 1810, and the interface circuit 1920 is configured to implement the functions of the transceiver module 1820.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements the functions of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

An embodiment of this application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the methods in the foregoing embodiments. For example, the communication apparatus includes one processor and one memory. As shown in FIG. 20, a communication apparatus 2000 includes a processor 2010 and a memory 2020. The processor 2010 is coupled to the memory 2020. The memory 2020 stores instructions. When the instructions stored in the memory 2020 are executed by the processor 2010, the communication apparatus 2000 performs the method performed by the sending apparatus in the method embodiment shown in FIG. 7, FIG. 14, or FIG. 17, or performs the method performed by the receiving apparatus in the method embodiment shown in FIG. 7, FIG. 14, or FIG. 17, or performs the method performed by the terminal device in the method embodiment shown in FIG. 17.

It can be understood that the processor in embodiments of this application may be a central processing unit (central processing unit, CPU), or may be another general-purpose processor, a digital signal processor (digital signal processor, DSP), an application-specific integrated circuit (Application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. The memory in embodiments of this application may include a volatile memory (volatile memory), for example, a random access memory (random access memory, RAM). The memory may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The method steps in embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, the storage medium is coupled to the processor, so that the processor can read information from the storage medium and write information to the storage medium. The storage medium may alternatively be a component of the processor. The processor and the storage medium may be located in an ASIC. In addition, the ASIC may be located in a base station or a terminal. The processor and the storage medium may alternatively exist in a base station or a terminal as discrete components.

All or some of the foregoing embodiments may be implemented by software, hardware, firmware, or any combination thereof. When the embodiments are implemented by software, all or some of the embodiments may be implemented in a form of a computer program product. The computer program product includes one or more computer programs or instructions. When the computer programs or the instructions are loaded and executed on a computer, all or some of the processes or the functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application provides a communication system. The communication system includes a sending apparatus and a processing apparatus. The sending apparatus may implement, for example, the functions of the sending apparatus in the method embodiment shown in FIG. 7, and the receiving apparatus may implement the functions of the receiving apparatus in the method embodiment shown in FIG. 7. Alternatively, the sending apparatus may implement, for example, the functions of the sending apparatus in the method embodiment shown in FIG. 14, and the receiving apparatus may implement the functions of the receiving apparatus in the method embodiment shown in FIG. 14. Alternatively, the sending apparatus may implement, for example, the functions of the sending apparatus in the method embodiment shown in FIG. 17, and the receiving apparatus may implement the functions of the receiving apparatus in the method embodiment shown in FIG. 17.

An embodiment of this application provides a communication system. The communication system includes a network device and a sending apparatus. The network device may implement, for example, the functions of the receiving apparatus in the method embodiment shown in FIG. 17, and the sending apparatus may implement the functions of the sending apparatus in the method embodiment shown in FIG. 17. Optionally, the communication system further includes a terminal device. The terminal device may implement, for example, the functions of the terminal device in the embodiment shown in FIG. 17.

An embodiment of this application provides a chip system. The chip system includes a processor and an interface. The processor is configured to invoke instructions from the interface and run the instructions. When the processor executes the instructions, the method according to any one of the method embodiments shown in FIG. 7, FIG. 14, or FIG. 17 is implemented.

An embodiment of this application provides a computer-readable storage medium. The computer-readable storage medium is configured to store a computer program or instructions. When the computer program or the instruction are run, the method according to any one of the method embodiments shown in FIG. 7, FIG. 14, or FIG. 17 is implemented.

An embodiment of this application provides a computer program product including instructions. When the computer program product runs on a computer, the method according to any one of the method embodiments shown in FIG. 7, FIG. 14, or FIG. 17 is implemented.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

It can be understood that various numbers in embodiments of this application are merely intended for differentiation for ease of description, but not to limit the scope of embodiments of this application. Sequence numbers of the foregoing processes do not mean an execution sequence, and an execution sequence of the processes should be determined based on functions and internal logic of the processes.

## Claims

1. A communication method, comprising:
respectively sending first-type reference signals of a first port on M resources, wherein there are a total of M first-type reference signals, and M is an integer greater than 1, wherein
the M first-type reference signals are in a one-to-one correspondence with M first-type sequences, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, both K and P are positive integers, and a sum of K and P is M.

2. The method according to claim 1, wherein the first sequence and the second sequence meet one or more of the following:
the first sequence and the second sequence are complementary sequences;
a sum of energy of a frequency domain response of the first sequence and energy of a frequency domain response of the second sequence is a constant; or
a sum of energy of a frequency domain response of the first sequence and energy of a frequency domain response of the second sequence is a constant modulus.

3. The method according to claim 1 or 2, wherein the method further comprises:
respectively sending second-type reference signals of a second port on the M resources, wherein there are a total of M second-type reference signals, wherein
the M second-type reference signals are in a one-to-one correspondence with M second-type sequences, K second-type sequences of the M second-type sequences are obtained by performing at least one of an identity operation, negation, conjugation, or flipping on the first sequence, and P second-type sequences of the M second-type sequences are obtained by performing at least one of an identity operation, negation, conjugation, or flipping on the second sequence.

4. The method according to any one of claims 1 to 3, wherein the method further comprises:
receiving first indication information, wherein the first indication information indicates a first orthogonal code, and the first orthogonal code is used to determine the M first-type sequences.

5. The method according to claim 4, wherein the K first-type sequences comprise a third sequence, the P first-type sequences comprise a fourth sequence, and the first orthogonal code indicates one of the following:
the third sequence is a result of an identity operation on the first sequence, and the fourth sequence is a result of conjugation and an identity operation on the second sequence;
the third sequence is a result of an identity operation on the first sequence, and the fourth sequence is a result of conjugation and negation on the second sequence;
the third sequence is a result of an identity operation on the first sequence, and the fourth sequence is a result of flipping, conjugation, and an identity operation on the second sequence; or
the third sequence is a result of an identity operation on the first sequence, and the fourth sequence is a result of flipping, conjugation, and negation on the second sequence.

6. The method according to claim 4, wherein the K first-type sequences comprise a third sequence and a fifth sequence, the P first-type sequences comprise a fourth sequence and a sixth sequence, and the first orthogonal code indicates one of the following:
the third sequence is a result of an identity operation on the first sequence, the fourth sequence is a result of an identity operation on the second sequence, the fifth sequence is a result of an identity operation on the first sequence, and the sixth sequence is a result of an identity operation on the second sequence;
the third sequence is a result of conjugation and negation on the first sequence, the fourth sequence is a result of conjugation on the second sequence, the fifth sequence is a result of conjugation and negation on the first sequence, and the sixth sequence is a result of conjugation on the second sequence;
the third sequence is a result of an identity operation on the first sequence, the fourth sequence is a result of an identity operation on the second sequence, the fifth sequence is a result of negation on the first sequence, and the sixth sequence is a result of negation on the second sequence; or
the third sequence is a result of conjugation on the first sequence, the fourth sequence is a result of conjugation and negation on the second sequence, the fifth sequence is a result of conjugation and negation on the first sequence, and the sixth sequence is a result of conjugation on the second sequence.

7. The method according to any one of claims 4 to 6, wherein the first orthogonal code comprises w(n), wherein
n=0, ..., F-1, F represents a total length of the first orthogonal code, n is an index of an orthogonal code in the first orthogonal code, w(n) is +1, -1, +flip{j}, -flip{j}, +j, or -j, j represents conjugation, and flip represents flipping.

8. The method according to any one of claims 1 to 7, wherein one of the M resources comprises D resource units, a first-type sequence of the M first-type sequences that corresponds to the resource comprises D elements, the D resource units are used for mapping the D elements, and D is an integer greater than or equal to 1.

9. A communication method, comprising:
obtaining one first-type result based on each of N first-type received signals and a seventh reference signal, wherein a total of N first-type results are obtained, the N first-type received signals are in a one-to-one correspondence with N first-type ports, and N is an integer greater than or equal to 1;
obtaining one second-type result based on each of the N first-type received signals and an eighth reference signal, wherein a total of N second-type results are obtained;
obtaining one third-type result based on each of N second-type received signals and a conjugate of the seventh reference signal, wherein a total of N third-type results are obtained;
obtaining one fourth-type result based on the N second-type received signals and a conjugate of the eighth reference signal, wherein a total of N fourth-type results are obtained; and
estimating channels of the N first-type ports and channels of the N second-type ports based on the N first-type results, the N second-type results, the N third-type results, and the N fourth-type results.

10. The method according to claim 9, wherein
the N first-type received signals comprise first-type reference signals of the N first-type ports that are respectively received on M resources, there are a total of N×M first-type reference signals, M is an integer greater than 1, and M is an integer greater than 1;
the N second-type received signals comprise second-type reference signals of the N second-type ports that are received on the M resources, and there are a total of N×M second-type reference signals; and
the seventh reference signal and the eighth reference signal correspond to two of the N×M first-type reference signals, or the seventh reference signal and the eighth reference signal correspond to two of the N×M second-type reference signals.

11. A communication method, comprising:
receiving first indication information, wherein the first indication information indicates a first orthogonal code, the first orthogonal code is used to determine M first-type sequences, the M first-type sequences are in a one-to-one correspondence with M first-type reference signals, the M first-type reference signals are used to estimate a channel of a first port, M is an integer greater than 1, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, M is an integer greater than 1, both K and P are positive integers, and a sum of K and P is M.

12. The method according to claim 11, wherein the K first-type sequences comprise a third sequence, the P first-type sequences comprise a fourth sequence, and the first orthogonal code indicates one of the following:
the third sequence is a result of an identity operation on the first sequence, and the fourth sequence is a result of conjugation and an identity operation on the second sequence;
the third sequence is a result of an identity operation on the first sequence, and the fourth sequence is a result of conjugation and negation on the second sequence;
the third sequence is a result of an identity operation on the first sequence, and the fourth sequence is a result of flipping, conjugation, and an identity operation on the second sequence; or
the third sequence is a result of an identity operation on the first sequence, and the fourth sequence is a result of flipping, conjugation, and negation on the second sequence.

13. The method according to claim 11, wherein the K first-type sequences comprise a third sequence and a fifth sequence, the P first-type sequences comprise a fourth sequence and a sixth sequence, the M first-type sequences comprise the third sequence, the fourth sequence, the fifth sequence, and the sixth sequence, and the first orthogonal code indicates one of the following:
the third sequence is a result of an identity operation on the first sequence, the fourth sequence is a result of an identity operation on the second sequence, the fifth sequence is a result of an identity operation on the first sequence, and the sixth sequence is a result of an identity operation on the second sequence;
the third sequence is a result of conjugation and negation on the first sequence, the fourth sequence is a result of conjugation on the second sequence, the fifth sequence is a result of conjugation and negation on the first sequence, and the sixth sequence is a result of conjugation on the second sequence;
the third sequence is a result of an identity operation on the first sequence, the fourth sequence is a result of an identity operation on the second sequence, the fifth sequence is a result of negation on the first sequence, and the sixth sequence is a result of negation on the second sequence; or
the third sequence is a result of conjugation on the first sequence, the fourth sequence is a result of conjugation and negation on the second sequence, the fifth sequence is a result of conjugation and negation on the first sequence, and the sixth sequence is a result of conjugation on the second sequence.

14. The method according to any one of claims 11 to 13, wherein the first orthogonal code comprises w(n), wherein
n=0, ..., F-1, F represents a total length of the first orthogonal code, n is an index of an orthogonal code in the first orthogonal code, w(n) is +1, -1, +flip{j}, -flip{j}, +j, or -j, j represents conjugation, and flip represents flipping.

15. The method according to any one of claims 11 to 14, wherein the first sequence and the second sequence meet one or more of the following:
the first sequence and the second sequence are complementary sequences;
a sum of energy of a frequency domain response of the first sequence and energy of a frequency domain response of the second sequence is a constant; or
a sum of energy of a frequency domain response of the first sequence and energy of a frequency domain response of the second sequence is a constant modulus.

16. The method according to any one of claims 11 to 15, wherein one of the M resources comprises D resource units, a first-type sequence of the M first-type sequences that corresponds to the resource comprises D elements, the D resource units are used for mapping the D elements, and D is an integer greater than or equal to 1.

17. A communication method, comprising:
sending first indication information, wherein the first indication information indicates a first orthogonal code, the first orthogonal code is used to determine M first-type sequences, the M first sequences are in a one-to-one correspondence with M first-type reference signals, the M first-type reference signals are used to estimate a channel of a first port, M is an integer greater than 1, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, M is an integer greater than 1, both K and P are positive integers, and a sum of K and P is M.

18. The method according to claim 17, wherein the K first-type sequences comprise a third sequence, the P first-type sequences comprise a fourth sequence, and the first orthogonal code indicates one of the following:
the third sequence is a result of an identity operation on the first sequence, and the fourth sequence is a result of conjugation and an identity operation on the second sequence;
the third sequence is a result of an identity operation on the first sequence, and the fourth sequence is a result of conjugation and negation on the second sequence;
the third sequence is a result of an identity operation on the first sequence, and the fourth sequence is a result of flipping, conjugation, and an identity operation on the second sequence; or
the third sequence is a result of an identity operation on the first sequence, and the fourth sequence is a result of flipping, conjugation, and negation on the second sequence.

19. The method according to claim 17, wherein the K first-type sequences comprise a third sequence and a fifth sequence, the P first-type sequences comprise a fourth sequence and a sixth sequence, the M first-type sequences comprise the third sequence, the fourth sequence, the fifth sequence, and the sixth sequence, and the first orthogonal code indicates one of the following:
the third sequence is a result of an identity operation on the first sequence, the fourth sequence is a result of an identity operation on the second sequence, the fifth sequence is a result of an identity operation on the first sequence, and the sixth sequence is a result of an identity operation on the second sequence;
the third sequence is a result of conjugation and negation on the first sequence, the fourth sequence is a result of conjugation on the second sequence, the fifth sequence is a result of conjugation and negation on the first sequence, and the sixth sequence is a result of conjugation on the second sequence;
the third sequence is a result of an identity operation on the first sequence, the fourth sequence is a result of an identity operation on the second sequence, the fifth sequence is a result of negation on the first sequence, and the sixth sequence is a result of negation on the second sequence; or
the third sequence is a result of conjugation on the first sequence, the fourth sequence is a result of conjugation and negation on the second sequence, the fifth sequence is a result of conjugation and negation on the first sequence, and the sixth sequence is a result of conjugation on the second sequence.

20. The method according to any one of claims 17 to 19, wherein the first orthogonal code comprises w(n), wherein
n=0, ..., F-1, F represents a total length of the first orthogonal code, n is an index of an orthogonal code in the first orthogonal code, w(n) is +1, -1, +flip{j}, -flip{j}, +j, or -j, j represents conjugation, and flip represents flipping.

21. The method according to any one of claims 17 to 20, wherein the first sequence and the second sequence meet one or more of the following:
the first sequence and the second sequence are complementary sequences;
a sum of energy of a frequency domain response of the first sequence and energy of a frequency domain response of the second sequence is a constant; or
a sum of energy of a frequency domain response of the first sequence and energy of a frequency domain response of the second sequence is a constant modulus.

22. The method according to any one of claims 17 to 21, wherein one of the M resources comprises D resource units, a first-type sequence of the M first-type sequences that corresponds to the resource comprises D elements, the D resource units are used for mapping the D elements, and D is an integer greater than or equal to 1.

23. A communication apparatus, comprising a transceiver module, wherein the transceiver module is configured to:
respectively send first-type reference signals of a first port on M resources, wherein there are a total of M first-type reference signals, and M is an integer greater than 1, wherein
the M first-type reference signals are in a one-to-one correspondence with M first-type sequences, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, both K and P are positive integers, and a sum of K and P is M.

24. The apparatus according to claim 23, wherein the first sequence and the second sequence meet one or more of the following:
the first sequence and the second sequence are complementary sequences;
a sum of energy of a frequency domain response of the first sequence and energy of a frequency domain response of the second sequence is a constant; or
a sum of energy of a frequency domain response of the first sequence and energy of a frequency domain response of the second sequence is a constant modulus.

25. The apparatus according to claim 23 or 24, wherein the transceiver module is further configured to:
respectively send second-type reference signals of a second port on the M resources, wherein there are a total of M second-type reference signals, wherein
the M second-type reference signals are in a one-to-one correspondence with M second-type sequences, K second-type sequences of the M second-type sequences are obtained by performing at least one of an identity operation, negation, conjugation, or flipping on the first sequence, and P second-type sequences of the M second-type sequences are obtained by performing at least one of an identity operation, negation, conjugation, or flipping on the second sequence.

26. The apparatus according to any one of claims 23 to 25, wherein the transceiver module is further configured to:
receive first indication information, wherein the first indication information indicates a first orthogonal code, and the first orthogonal code is used to determine the M first-type sequences.

27. The apparatus according to claim 26, wherein the K first-type sequences comprise a third sequence, the P first-type sequences comprise a fourth sequence, and the first orthogonal code indicates one of the following:
the third sequence is a result of an identity operation on the first sequence, and the fourth sequence is a result of conjugation and an identity operation on the second sequence;
the third sequence is a result of an identity operation on the first sequence, and the fourth sequence is a result of conjugation and negation on the second sequence;
the third sequence is a result of an identity operation on the first sequence, and the fourth sequence is a result of flipping, conjugation, and an identity operation on the second sequence; or
the third sequence is a result of an identity operation on the first sequence, and the fourth sequence is a result of flipping, conjugation, and negation on the second sequence.

28. The apparatus according to claim 26, wherein the K first-type sequences comprise a third sequence and a fifth sequence, the P first-type sequences comprise a fourth sequence and a sixth sequence, and the first orthogonal code indicates one of the following:
the third sequence is a result of an identity operation on the first sequence, the fourth sequence is a result of an identity operation on the second sequence, the fifth sequence is a result of an identity operation on the first sequence, and the sixth sequence is a result of an identity operation on the second sequence;
the third sequence is a result of conjugation and negation on the first sequence, the fourth sequence is a result of conjugation on the second sequence, the fifth sequence is a result of conjugation and negation on the first sequence, and the sixth sequence is a result of conjugation on the second sequence;
the third sequence is a result of an identity operation on the first sequence, the fourth sequence is a result of an identity operation on the second sequence, the fifth sequence is a result of negation on the first sequence, and the sixth sequence is a result of negation on the second sequence; or
the third sequence is a result of conjugation on the first sequence, the fourth sequence is a result of conjugation and negation on the second sequence, the fifth sequence is a result of conjugation and negation on the first sequence, and the sixth sequence is a result of conjugation on the second sequence.

29. The apparatus according to any one of claims 26 to 28, wherein the first orthogonal code comprises w(n), wherein
n=0, ..., F-1, F represents a total length of the first orthogonal code, n is an index of an orthogonal code in the first orthogonal code, **w(n)** is +1, -1, +flip{j}, -flip{j}, +j, or -j, j represents conjugation, and flip represents flipping.

30. The apparatus according to any one of claims 26 to 29, wherein one of the M resources comprises D resource units, a first-type sequence of the M first-type sequences that corresponds to the resource comprises D elements, the D resource units are used for mapping the D elements, and D is an integer greater than or equal to 1.

31. A communication apparatus, comprising a processing module, wherein the processing module is configured to:
obtain one first-type result based on each of N first-type received signals and a seventh reference signal, wherein a total of N first-type results are obtained, the N first-type received signals are in a one-to-one correspondence with N first-type ports, and N is an integer greater than or equal to 1;
obtain one second-type result based on each of the N first-type received signals and an eighth reference signal, wherein a total of N second-type results are obtained;
obtain one third-type result based on each of N second-type received signals and a conjugate of the seventh reference signal, wherein a total of N third-type results are obtained;
obtain one fourth-type result based on the N second-type received signals and a conjugate of the eighth reference signal, wherein a total of N fourth-type results are obtained; and
estimate channels of the N first-type ports and channels of the N second-type ports based on the N first-type results, the N second-type results, the N third-type results, and the N fourth-type results.

32. The apparatus according to claim 31, wherein
the N first-type received signals comprise first-type reference signals of the N first-type ports that are respectively received on M resources, there are a total of N×M first-type reference signals, M is an integer greater than 1, and M is an integer greater than 1;
the N second-type received signals comprise second-type reference signals of the N second-type ports that are received on the M resources, and there are a total of N×M second-type reference signals; and
the seventh reference signal and the eighth reference signal correspond to two of the N×M first-type reference signals, or the seventh reference signal and the eighth reference signal correspond to two of the N×M second-type reference signals.

33. A communication apparatus, comprising a transceiver module, wherein the transceiver module is configured to:
receive first indication information, wherein the first indication information indicates a first orthogonal code, the first orthogonal code is used to determine M first-type sequences, the M first sequences are in a one-to-one correspondence with M first-type reference signals, the M first-type reference signals are used to estimate a channel of a first port, M is an integer greater than 1, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, M is an integer greater than 1, both K and P are positive integers, and a sum of K and P is M.

34. A communication apparatus, comprising a transceiver module, wherein the transceiver module is configured to:
send first indication information, wherein the first indication information indicates a first orthogonal code, the first orthogonal code is used to determine M first-type sequences, the M first sequences are in a one-to-one correspondence with M first-type reference signals, the M first-type reference signals are used to estimate a channel of a first port, M is an integer greater than 1, K first-type sequences of the M first-type sequences are obtained by performing at least one of an identity operation, negation, conjugation, or flipping on a first sequence, P first-type sequences of the M first-type sequences are obtained by performing at least one of an identity operation, negation, conjugation, or flipping on a second sequence, M is an integer greater than 1, both K and P are positive integers, and a sum of K and P is M.

35. The apparatus according to claim 33 or 34, wherein the K first-type sequences comprise a third sequence, the P first-type sequences comprise a fourth sequence, and the first orthogonal code indicates one of the following:
the third sequence is a result of an identity operation on the first sequence, and the fourth sequence is a result of conjugation and an identity operation on the second sequence;
the third sequence is a result of an identity operation on the first sequence, and the fourth sequence is a result of conjugation and negation on the second sequence;
the third sequence is a result of an identity operation on the first sequence, and the fourth sequence is a result of flipping, conjugation, and an identity operation on the second sequence; or
the third sequence is a result of an identity operation on the first sequence, and the fourth sequence is a result of flipping, conjugation, and negation on the second sequence.

36. The apparatus according to claim 33 or 34, wherein the K first-type sequences comprise a third sequence and a fifth sequence, the P first-type sequences comprise a fourth sequence and a sixth sequence, the M first-type sequences comprise the third sequence, the fourth sequence, the fifth sequence, and the sixth sequence, and the first orthogonal code indicates one of the following:
the third sequence is a result of an identity operation on the first sequence, the fourth sequence is a result of an identity operation on the second sequence, the fifth sequence is a result of an identity operation on the first sequence, and the sixth sequence is a result of an identity operation on the second sequence;
the third sequence is a result of conjugation and negation on the first sequence, the fourth sequence is a result of conjugation on the second sequence, the fifth sequence is a result of conjugation and negation on the first sequence, and the sixth sequence is a result of conjugation on the second sequence;
the third sequence is a result of an identity operation on the first sequence, the fourth sequence is a result of an identity operation on the second sequence, the fifth sequence is a result of negation on the first sequence, and the sixth sequence is a result of negation on the second sequence; or
the third sequence is a result of conjugation on the first sequence, the fourth sequence is a result of conjugation and negation on the second sequence, the fifth sequence is a result of conjugation and negation on the first sequence, and the sixth sequence is a result of conjugation on the second sequence.

37. The apparatus according to any one of claims 33 to 36, wherein
the first orthogonal code comprises **w(n),** wherein
n=0, ..., F-1, F represents a total length of the first orthogonal code, n is an index of an orthogonal code in the first orthogonal code, w(n) is +1, -1, +flip{j}, -flip{j}, +j, or -j, j represents conjugation, and flip represents flipping.

38. The apparatus according to any one of claims 33 to 37, wherein
the first sequence and the second sequence meet one or more of the following:
the first sequence and the second sequence are complementary sequences;
a sum of energy of a frequency domain response of the first sequence and energy of a frequency domain response of the second sequence is a constant; or
a sum of energy of a frequency domain response of the first sequence and energy of a frequency domain response of the second sequence is a constant modulus.

39. The apparatus according to any one of claims 33 to 38, wherein
one of the M resources comprises D resource units, a first-type sequence of the M first-type sequences that corresponds to the resource comprises D elements, the D resource units are used for mapping the D elements, and D is an integer greater than or equal to 1.

40. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement, through a logic circuit or by executing code instructions, the method according to any one of claims 1 to 8, the method according to claim 9 or 10, the method according to any one of claims 11 to 16, or the method according to any one of claims 17 to 22.

41. A computer program product comprising instructions, wherein when the instructions are run by a communication apparatus, the communication apparatus is enabled to perform the method according to any one of claims 1 to 8, the method according to claim 9 or 10, the method according to any one of claims 11 to 16, or the method according to any one of claims 17 to 22.

42. A computer-readable storage medium, wherein the storage medium stores a computer program or instructions, and when the computer program or the instructions are executed by a communication apparatus, the method according to any one of claims 1 to 8, the method according to claim 9 or 10, the method according to any one of claims 11 to 16, or the method according to any one of claims 17 to 22 is implemented.
